# EUROPÄISCHE PATENTSCHRIFT

(11) **EP 0 350 634 B1**
(45) Veröffentlichungstag und Bekanntmachung des Hinweises auf die Patenterteilung: **22.12.1993**
(21) Anmeldenummer: 89110733.6
(22) Anmeldetag: 14.06.1989
(51) Int. Cl.: A01C 7/04, A01C 5/06

(54) **Verfahren zum Aussäen von Saatkörnern**
Method for depositing grain seeds
Méthode pour déposer des graines

(30) Priorität: 15.07.1988 DE 3824061; 03.02.1989 DE 3903225; 17.09.1988 DE 3831619; 28.07.1988 DE 3825572
(43) Veröffentlichungstag der Anmeldung: 17.01.1990
(73) Patentinhaber: Amazonen-Werke H. Dreyer GmbH & Co. KG, D-49205 Hasbergen (DE)
(72) Erfinder: Gattermann, Bernd, Dipl.-Ing., D-2872 Hude 1 (DE)

(56) Entgegenhaltungen:
- DE-A- 2 826 658
- FR-A- 992 481

## Beschreibung

Die Erfindung betrifft ein Verfahren zum Aussäen von Saatkörnern gemäß der Oberbegriffe des Patenanspruches 1 sowie die landwirtschaftliche Drillmaschine zur Durchführung dieses Verfahrens gemäß des Oberbegriffes des Patentanspruches 4.

Ein derartiges Verfahren ist durch die DE-C 30 03 942 bekannt. Gemäß diesem Verfahren wird das Saatgut mittels Volumendosierung den Säscharen zugeführt. Bei diesem bekannten Verfahren besteht die Aufgabe der Drillmaschinen besteht darin, daß Saatgut in Reihen oder Bändern mit möglichst exakt eingehaltener Ablagetiefe in den Boden einzubetten. Hierzu ist im unteren Bereich des Vorratsbehälters ein regelbarer Dosiermechanismus vorgesehen, durch den ein Saatgutstrom über Saatleitungsrohre den einzelnen Säscharen zugeleitet wird. Die Ablagetiefe des Saatgutes kann durch die Tiefe der Säfurche verhältnismäßig exakt reguliert werden, indem die Säschare in entsprechender Weise mit Federdruck belastet werden. Die Verteilung des Saatgutes in der Reihe bzw. in Längsrichtung ist hingegen absolut dem Zufall überlassen. Aus pflanzenbaulichen Gründen wäre es jedoch bei der Aussaat von Feldfrüchten wünschenswert, wenn die Abstände der Saatkörner zueinander in der Reihe möglichst immer gleich groß wären. Diese Drillmaschine weist einem Rahmen, Vorratsbehälter und an dem Rahmen in aufrechter Ebene bewegbar angelenkten Säscharen, wobei sich die Drillmaschine in Betriebsstellung über Laufräder auf dem Boden abstützt, auf.

Durch die DE-C 28 26 658 ist eine Sämaschine bekannt, die geeignet sein soll, Getreide und andere Saatgutarten nach dem Prinzip der Gleichstandssaat auszubringen, bei dem die einzelnen Saatkörner innerhalb der Reihen einem gleichmäßigen Abstand zueinander aufweisen. Diese Sämaschine besitzt einen Rahmen, auf dem der Vorratsbehälter angeordnet ist. An diesem Vorratsbehälter sind eine Vielzahl von Vereinzelungsvorrichtungen angeschlossen, die jeweils in Transporteinrichtungen übergehen, die ihrerseits in je einem Säschar enden, welches beim Säen in den Boden eindringt. Da die Vereinzelungsvorrichtung für das Saatgut und die Transportvorrichtungen der vereinzelten Saatkörner zu den Säscharen der hier bekannten Sämaschine äußerst aufwendig ist, hat sich diese Maschine nicht in der landwirtschaftlichen Praxis durchgesetzt.

Die FR-A 992 481 zeigt eine Drillmaschine gemäß des Oberbegriffes des Patenanspruches 4. Bei dieser Drillmaschine werden die sich im Vorratsbehälter befindlichen Saatkörner über eine Dosiervorrichtung mittels einer Volumendosierung dem Vorratsbehälter entnommen und der Ablagevorrichtung zugeführt. Die Ablagevorrichtung ist als Fallrohr ausgebildet, so daß die Samenkörner auf dem Boden abgelegt werden. Zwischen der Dosiervorrichtung und dem Fallrohr ist eine Rinne, welche in Fahrtrichtung ausgerichtet ist und von einer Antriebsvorrichtung in Schwingungen versetzt wird, angeordnet. Dadurch, daß das Ende der Rinne sich in einem großen Abstand zum Boden befindet, ist eine gleichmäßige Ablage der Samenkörner im Boden nicht in allen Fällen gewährleistet.

Der Erfindung liegt nun die Aufgabe zugrunde, auf einfachste Weise bei der Aussaat von Saatgütern wie beispielsweise Mais, Getreide oder Raps mit einer Drillmaschine, die einzelnen Saatkörner mit zumindest annähernd gleichmäßigen Abständen in der Reihe im Boden abzulegen.

Diese Aufgabe wird in erfindungsgemäßer Weise durch das im Anspruch 1 wiedergegebene Verfahren gelöst.

Infolge dieser Maßnahme ist es auf einfachste Weise möglich, daß eine möglichst genaue und gleichmäßige Ablage der von der schwingenden Rinne in gleichmäßiger Weise vergleichmäßigten und verteilten Saatkörner im Boden erreicht wird, wobei sich der Abgabepunkt der Verteilrinne durch die Anordnung im Säschar sehr dicht über dem Säfurchenboden befindet. Hierdurch wird erreicht, daß nur kleine Fallgeschwindigkeiten beim Auftreffen des Saatgutes auf den Säfurchenboden entstehen, so daß die Körner nicht wieder aus der Furche herausspringen. Des weiteren kann auf diese Weise die Ablage nicht durch Aufprall der Saatkörner an der Furchenwand oder am Säscharkörper verfälscht werden. Vorteilhaft ist eine Abwurfhöhe von ca. 3 cm.

Ein fahrbares landwirtschaftliches Gerät ist bereits durch die DE-C 12 83 012 bekannt. Dieses Gerät weist einen Vorratsbehälter mit Auslaufstutzen und Furchenziehvorrichtungen auf, wobei die Auslaufstutzen jeweils in eine parallel zur Fahrtrichtung angeordneten Dosierrinne münden. Die Dosierrinnen dienen zum Abwerfen von Zwiebeln, Knollen, Samen bzw. sonstigem mehr oder weniger grobkörnigem Gut in die von den Furchenziehvorrichtungen erzeugten Furchen. Den Dosierrinnen wird das sich im Vorratsbehälter befindliche Gut über die Auslaufstutzen, deren Auslaufquerschnitt veränderbar ist, zugeführt. Zwischen dem Vorratsbehälter und dem Boden angeordnete, mit ihrem Auslaufende in Fahrtrichtung weisende Dosierrinnen sind in Längsrichtung mittels eines Antriebes hin- und herbewegbar am Rahmen des Gerätes gelagert. Mit Hilfe dieses einstellbaren Schüttelantriebes soll erreicht werden, daß durch eine entsprechende Koordinierung der Antriebseinstellung mit der Fahrgeschwindigkeit die pro Zeiteinheit abgelegten Gutsmengen genau dosiert und einzelne Zwiebeln oder Knollen mit vorbestimmten Abständen abgelegt werden.

Dieses fahrbare, als Pflanzmaschine ausgebildet Gerät dient zum Auswerfen von Zwiebeln, Knollen oder sonstigen mehr oder weniger grobkörnigem Gut, wobei die Dosierrinne gleichzeitig für die Dosierung und die Zuführung der abzulegenden Gutsmengen aus dem Vorratsbehälter zum Boden dient. Da von diesem Gerät überwiegend vorgekeimtes Saatgut im Boden abgelegt wird, sind die Dosierrinnen höhenverstellbar gegenüber dem Furchenboden der von den Furchenziehvorrichtungen erzeugten Furchen am Rahmen der Pflanzmaschine angeordnet, wodurch sich die Fallhöhe und demzufolge auch die Fallgeschwindigkeit des abzulegenden Saatgutes derart verändern läßt, so daß das Gut förmlich auf dem Furchenboden abgelegt wird. Hierdurch sollen Beschädigungen des vorgekeimten Saatgutes oder evtl. Keime oder Sprößlinge vermieden werden. Mit diesem Gerät lassen sich nur grobkörnige Saatgüter wie Zwiebeln, Knollen etc. im Boden ablagen, eine Nutzung dieses Gerätes zum Ausbringen von feineren Saatgutarten wie beispielsweise Mais, Getreide oder Raps ist nicht möglich, da das Saatgut nicht in ausreichender Form mittels der Dosierrinnen aus dem Vorratsbehälter dosiert werden kann.

Zur Durchführung des vorab beschriebenen Verfahrens zum Aussäen von Saatgut wird eine Drillmaschine gemäß des Anspruches 4 vorgeschlagen.

Eine besonders kompakte Bauweise entsteht erfindungsgemäß dadurch, daß die Rinne mit ihrem Antrieb in das jeweilige Säschar integriert angeordnet ist.

In einer besonders bevorzugten Ausführungsform ist erfindungsgemäß vorgesehen, daß zwischen der Rinne und dem Vorratsbehälter ein antreibbares und regelbares Dosierorgan angeordnet ist, über welches die auszubringende Menge oder Anzahl von Samenkörnern bestimmt wird und über welches die Samenkörner der Rinne zugeführt werden, wobei das Ende der Rinne gegen die Fahrtrichtung weist.

Infolge dieser Maßnahmen wird der jeweiligen Verteilrinne ausschließlich die Aufgabe der Vergleichmäßigung der von den Dosierorganen dosierten Samenkörner zugeordnet, während die Dosierorgane die auszubringende Menge an Samenkörnern bzw. Anzahl von Samenkörnern bestimmt. Die Verteilrinne vergleichmäßigt in überraschend einfacher Weise den von den Dosierorganen in ungleichförmiger Weise dosierten und den Verteilrinnen zugeführten Saatgutstrom. Durch die erfindungsgemäßen Maßnahmen wird es erstmals möglich, auf überraschend einfache Weise mit herkömmlichen Sämaschinen und den Einsatz der Verteilrinnen im Säschar eine einzelkornähnliche Ablage des Saatgutes mit zumindest annähernd gleichmäßigen Abständen der Saatkörner in der Reihe zueinander für alle üblichen Feldfrüchte mit hoher Präzision zu erreichen. Die jeweilige Verteilrinne vereinzelt die von den Dosierorganen dosierten Saatkörner, so daß sich mit einer herkömmlichen Sämaschine und den Einsatz der als Verteilrinnen ausgebildeten Vergleichmäßigungsvorrichtungen eine einzelkornähnliche Aussaat aller üblichen Feldfrüchte verwirklichen läßt.

Der ungleichförmig von den Dosierorganen geförderte Saatgutstrom wird am Einlaufbereich der Verteilrinne kurzfristig zwischengelagert. Unter dem Auslauf des Einlaufrohres, welches in dem Säschar oberhalb der Verteilrinne mündet, befindet sich ein ständig veränderder Saatgutvorrat. Von hieraus wird dann durch die Verteilrinne das Saatgut abgezogen. Die Schichthöhe des Saatgutes in der Rinne vergleichmäßigt sich auf dem Weg zum Abwurfpunkt. Im Idealfall liegen die Körner einzeln hintereinander. Es ist jedoch auch ohne weiteres denkbar, daß in der V-förmigen Verteilerrinne zwei oder mehr Körner übereinander liegen. Entscheidend ist, daß die Schichthöhe von Saatkörnern in der Verteilrinne möglichst gleichmäßig ist. Selbst bei mehrfach übereinanderliegenden Körnern ergibt sich eine Vergleichmäßigung der Saatgutablage in der Reihe gegenüber den bisherigen, bei den herkömmlich in der Praxis angewendeten Säverfahren, deren Saatgutablage im absolut unkontrollierbaren Zustand erfolgt. Durch die Vibrationen bzw. Schwingungen der Verteilrinne wird die Reibung zwischen den Körnern herabgesetzt, gleichzeitig erfahren die Körner eine Förderung in Richtung zum Abwurfpunkt der Verteilrinne. Hierbei sortieren sich die Körner, wie gewünscht, so daß sie in einer Reihe hintereinanderliegen. Zumindest ist in dieser Position die bestmögliche Verteilung bzw. Ablage in äußerst einfacher und überraschender Weise erreicht. In dem Bereich, in dem die Körner noch mehrfach übereinanderliegen, entsteht ein zusätzlicher Druck auf die einzelnen Saatkörner, der die Einsortierung der Körner hintereinander begünstigt. Bei einer höheren Schicht Körner im Aufgabebereich der Verteilrinne entsteht ein flüssigkeitsähnliches Verhalten, das am Abwurfpunkt der Verteilrinne weitgehend unabhängig von der Körnerzahl pro Zeiteinheit zu einer konstanten Schichthöhe von einem Korn führt. Da dieser Vorgang nicht immer für alle Saatgüter und alle auftretenden Fördermengen mit der gleichen Frequenz und der gleichen Amplitude der Verteilrinne zu erreichen ist, ist es vorteilhaft, in Anpassung an das Saatgut oder an den gewünschten Saatgutabstand der einzelnen Saatkörner zueinander u.U. auch in Anpassung an die Saatmenge, Frequenz und Amplitude der Verteilrinne variieren zu können, um zu der Schichthöhe von einem Korn am Abwurfpunkt zu gelangen.

Aus den vorab genannten Gründen ist erfindungsgemäß vorgesehen, daß der Antrieb für die Verteilrinne derart regel- oder steuerbar ist, daß die Amplitude und/oder die Schwingungsfrequenz der Verteilrinne in Anpassung an die verschiedenen Saatgüter und/oder Ausbringmengen und/oder Abstände der einzelnen Saatkörner zueinander in der Reihe variiert werden kann. Hierbei ist in einer besonders bevorzugten Ausführungsform weiterhin erfindungsgemäß vorgesehen, daß die Regel- und/oder Steuerung des Antriebes für die Verteilrinne in Abhängigkeit der Fahrgeschwindigkeit, mit der sich die Drillmaschine über zu besäende Fläche hinweg bewegt, erfolgt. Hierdurch ist es möglich, durch den entsprechenden Antrieb der Verteilrinnen den vorab gewählten Saatkornabstand der einzelnen Saatkörner in der Reihe zueinander unabhängig von der exakt einzuhaltenden, unabhängig von der jeweiligen Fahrgeschwindigkeit.

Mit dieser Sävorrichtung lassen sich auf einfachste Weise bei der Aussaat von Saatgütern wie beispielsweise Mais, Getreide oder Raps mit einer Drillmaschine, die einzelnen Saatgüter mit zumindest annähernd gleichmäßigen Abständen in der Reihe im Boden ablegen. Mit einer mit einer derartigen Ausstattung ausgerüsteten Sävorrichtung läßt sich eine einzelkornähnliche und eine einzelkorngleichmäßige Saatgutablage der Saatkörner im Boden erzielen, ohne daß spezielle, herkömmliche und teuere Einzelkornsämschinen eingesetzt werden müssen. Für sämtliche Saatgüter läßt sich so auf einfachste Weise eine Saatgutvereinzelung mit einer konventionellen Drillmaschine erreichen.

Weiterhin ist erfindungsgemäß vorgesehen, daß der Schwingungsantrieb der Schwingrinne so angeordnet ist, daß sich das Ende der Rinne in senkrechter Ebene des mittleren Bereiches des Schwingungsantriebes befindet. Hierbei ist dann erfindungsgemäß vorgesehen, daß der Schwingungsantrieb als Rotationsschwinger ausgebildet ist.
Infolge dieser Maßnahmen ergibt sich eine besonders vorteilhafte Anordnung für den Antrieb der Schwingrinne, wobei der Schwingungsantrieb genau auf Höhe des Schwingungsmaximums an der Schwingrinne befestigt ist. Hierdurch wird erreicht, daß die der Schwingrinne mittels der Volumendosierung zugeführten Saatkörner exakt vom Einlaufpunkt der Schwingrinne abgezogen und sich zur Abwurfstelle der Schwingrinne hin orientieren und an der Abwurfstelle ein Korn hinter dem anderen liegt. Nach einem Stoppen der Saatgutzufuhr durch Unterbrechung des Antriebs der Dosierorgane wird durch die erfindungsgemäße Anordnung des Schwingungsantribes erreicht, daß alles den Schwingrinnen bereits zudosierte Saatgut aus den Schwingrinnen abgezogen wird und keine Saatkörner mehr in den Schwingrinnen verbleiben.

In einer besonders bevorzugten Ausführungsform ist erfindungsgemäß vorgesehen, daß der Schwingungsantrieb der Schwingrinne oberhalb der Schwingrinne angeordnet ist. Hierdurch ergibt sich eine besonders günstige Einbauposition des Schwingungsantriebes für die Schwingrinne im Säschar.

Des weiteren ist erfindungsgemäß vorgesehen, daß der Schwingungsantrieb für die Schwingrinne regel- und/oder steuerbar ist, daß die Amplitude und/oder die Schwingungsfrequenz der Verteilrinne in Anpassung an die verschiedenen Saatgüter und/oder Ausbringmengen und/oder Abstände der einzelnen Saatkörner in der Reihe zueinander variiert werden kann. Hierbei ist in einer besonders bevorzugten Ausführungsform weiterhin erfindungsgemäß vorgesehen, daß die Regel- und/oder Steuerung des Schwingungsantriebes für die Schwingrinne in Abhängigkeit der Fahrgeschwindigkeit, mit der sich die Sävorrichtung über die zu besäende Fläche hinweg bewegt, erfolgt. Hierdurch ist es nun möglich, durch den entsprechenden Antrieb der Verteilrinnen den vorab gewählten Saatkornabstand der einzelnen Saatkörner in der Reihe zueinander exakt einzuhalten, unabhängig von der jeweiligen Fahrgeschwindigkeit. Eine Veränderung der Amplitude bzw. der Schwingungsfrequenz der Verteilrinne in Anpassung an die verschiedenen Saatgüter, die unterschiedlichen Ausbringmengen und die sich ändernden Abstände der einzelnen Saatkörner in der Reihe zueinander, ist erforderlich, um am Abwurfpunkt der Verteilrinne weitgehend unabhängig von der Körnerzahl pro Zeiteinheit zu einer konstanten Schichthöhe der Saatkörner von einem Korn zu kommen. Dieser Vorgang ist nicht immer für alle Saatgüter und alle auftretenden Fördermengen mit der gleichen Frequenz und der gleichen Amplitude der Verteilrinne zu erreichen.

In einer weiteren Ausführungsform ist erfindungsgemäß vorgesehen, daß sich Sensoren zur Ermittlung der Schichthöhe der Körner in der Schwingrinne im unmittelbaren Bereich der Abwurfstelle der Schwingrinne befinden. Durch die fortlaufende Überwachung der Schichthöhe der Saatkörner im unmittelbaren Bereich vor der Abwurfstelle der Schwingrinne soll vermieden werden, daß mehrere übereinanderliegende Körner die Ablaufstelle gleichzeitig passieren und die Körner somit nur einen sehr geringen oder gar keinen Abstand voneinander aufweisen. Hierbei ist erfindungsgemäß vorgesehen, daß die Signale der Sensoren zur Ermittlung der Schichthöhe der Körner in der Schwingrinne an die elektronische Regel- und/oder Steuereinrichtung übermittelt werden und daß die elektronische Regel- und/oder Steuereinrichtung eine entsprechende Auswertung dieser Signale vornimmt, so daß die Rechnereinheit der Regel- und/oder Steuereinrichtung Rückschlüsse aus der Schichthöhe der Körner im Bereich der Abwurfstelle der Schwingrinne ziehen kann, und daß dann hieraus ermittelt wird, ob die Schichthöhe einem Korn oder mehreren übereinanderliegenden Körnern im Bereich der Abwurfstelle, der Schwingrinne entspricht. Besteht die Schichthöhe der Körner nun aus mehreren übereinander angeordneten Körnern im Bereich der Abwurfstelle wird die Fördergeschwindigkeit der Schwingrinne mittels der elektronischen Regel- und/oder Steuereinrichtung derart erhöht, bis in der V-förmigen Schwingrinne exakt ein Korn hinter dem anderen liegt. Dieses wird durch die erfindungsgemäße Maßnahme erreicht, daß die elektronische Regel- und/oder Steuereinrichtung mit dem elektrisch oder elektronisch regel- und/oder steuerbaren Schwingungsantrieb für die Schwingrinne gekoppelt ist, und daß die von den an der Schwingrinne angeordneten Sensoren aufgenommenen Signale zur Regel- und/oder Steuerung der Fördergeschwindigkeit der Schwingrinne durch eine entsprechende Drehzahlveränderung des Schwingungsantriebes dienen.

Zur Vervollkommnung dieser Regel- und/oder Steuereinrichtung ist des weiteren erfindungsgemäß vorgesehen, daß sich unmittelbar hinter der Abwurfstelle der Schwingrinne für die Saatkörner ein Sensor befindet, der den Abstand der einzelnen, die Wurfstelle bereits passierten Saatkörner zueinander ermittelt.

Darüber hinaus ist erfindungsgemäß vorgesehen, daß die von den an der Schwingrinne angeordneten Sensoren aufgenommenen Signale zur Überwachung und Regelung der Fördergeschwindigkeit der Schwingrinne dienen, und daß die von den Sensoren aufgenommenen, an die elektronische Regel- und/oder Steuereinrichtung weitergeleitete Signale zum Variieren der Fördergeschwindigkeit der Körner in der Schwingrinne, zur Erzielung optimaler Abwurfverhältnisse (ein Korn hinter dem anderen), dienen. Mittels dieser an der Schwingrinne angeordneten Sensoren und der elektronischen Regel- und/oder Steuereinrichtung ist es nun also auf einfachste Weise möglich, die Fördergeschwindigkeit der Schwingrinne zu erhöhen, wenn die Schichthöhe unmittelbar im Bereich der Abwurfstelle aus mehreren übereinanderliegenden Körnern besteht, oder aber die Fördergeschwindigkeit der Schwingrinne zu erhöhen oder reduzieren, wenn zwischen den Körnern nach passieren der Abwurfstelle unterschiedliche Abstände der einzelnen Saatkörner zueinander auftreten. Mittels eines derartigen Antriebes für die im Säschar angeordnete Schwingrinne ist es nun möglich, die Saatkörner in der gewünschten Weise, d.h. mit den jeweils gewünschten Abständen der einzelnen Saatkörner in der Reihe zueinander einzelkornähnlich im Boden abzulegen. Unerwünschte Lücken zwischen den Körnern oder mehrfach übereinanderliegende Körner im Bereich der Abwurfstelle der Schwingrinne werden somit vermieden. Mittels der elektronischen Regel- und/oder Steuereinrichtung ist es auf einfachste Weise möglich, die Zahl der pro Zeiteinheit auszubringenden Körner und das Körnervolumen (bzw. 1000 Korngewicht), welches von Saatgut zu Saatgut und in Abhängigkeit von anderen Faktoren wie beispielsweise Reihenabstand, klimatische Verhältnisse, Bodenart usw. stark schwanken kann, auf einfachste Weise zu berücksichtigen und so eine Erzielung der optimalen Abwurfverhältnisse der Saatkörner von der Schwingrinne durch Variation der Fördergeschwindigkeit der Körner in der Rinne zu erhalten.

Um nun das exakte Ermitteln der jeweiligen Schichthöhe von Saatkörnern im unmittelbaren Bereich der Abwurfstelle der Schwingrinne exakt durchführen zu können, ist erfindungsgemäß vorgesehen, daß die jeweilige Korngröße der jeweils auszusanden Saatkörner entweder mittels der an der Abwurfstelle oder im Bereich der Rinne angeordneter Sensoren die Korngröße der Saatkörner erfaßt, oder aber daß die Korngröße des jeweils auszusäenden Saatgutes in den Rechner der elektronischen Regel- und/oder Steuereinrichtung manuell einzugeben ist, so daß der Rechner anhand der von den Sensoren gelieferten Signale Rückschlüsse aus der Schichthöhe der Körner im Abwurfbereich der Schwingrinne ziehen kann, ob die Schichthöhe einem Korn oder mehreren übereinanderliegenden Körnern entspricht.

Zur Regelung des Schwingungsantriebes der in jedem Säschar der Sävorrichtung angeordneten Schwingrinne ist erfindungsgemäß vorgesehen, daß die Sensoren zur Ermittlung der Schichthöhe der Saatkörner im Abwurfbereich der Schwingrinne und des Abstandes der einzelnen Saatkörner zueinander nur an der Schwingrinne von zumindest einem einzigen Säschar angeordnet sind. Mit den von diesen Sensoren ermittelten Wertes werden die Schwingungsantriebe aller, an der Sämaschine angeordneter Schwingrinnen überwacht, geregelt und gesteuert.

Es ist aber auch ebenfalls erfindungsgemäß möglich, daß die Sensoren zur Ermittlung der Schichthöhe der Saatkörner im Abwurfbereich der Schwingrinne und des Abstandes der einzelnen Saatkörner zueinander an vereinzelnten, über die Arbeitsbreite der Sävorrichtung verteilten Säscharen oder an allen Säscharen der Sävorrichtung angeordnet sind.

In einer besonders bevorzugten Ausführungsform ist erfindungsgemäß vorgesehen, daß der Sensor zur Ermittlung des Abstandes der einzelnen Saatkörner zueinander auch zum Zählen der ausgebrachten Saatkörner dient unabhängig davon, ob die Sensoren nur an der Schwingrinne eines Säschares oder an allen Schwingrinnen der Säschare angeordnet sind. Hierdurch läßt sich dann die Anzahl der pro Flächeneinheit ausgesäten Saatkörner ermitteln und bei einer Abweichung der Anzahl der ausgesäten von der auszusäenden Anzahl der Saatkörner eine entsprechende Beeinflussung der Fördergeschwindigkeit der Körner in der Schwingrinne vorzunehmen, bis die tatsächliche mit der gewünschten Anzahl von ausgerüsteten Saatkörnern übereinstimmt.

Um die aus einem Vorratsbehälter entnommenen Samenkörner mittels einer Vorrichtung genau zu dosieren und mit gleichmäßigen Abständen dieses dosierte Saatgut im Boden abzulegen, ist erfindungsgemäß in einer Ausführungsform vorgesehen, daß die Rinne als Verteilrinne zum vergleichmäßigen der Saatkörner bzw. des Körnerstromes ausgebildet ist, und daß zwischen dem Vorratsbehälter und der jeweiligen Verteilrinne ein rotierend antreibbares und regelbares Dosierorgan angeordnet ist, über welches die auszubringende Menge oder Anzahl von Samenkörnern bestimmt wird. Infolge dieser Maßnahmen wird der Verteilrinne ausschließlich die Aufgabe der Vergleichmäßigung der von dem Dosierorgan dosierten Samenkörner zugeordnet, während das Dosierorgan die auszubringene Menge an Samenkörnern bzw. Anzahl an Samenkörnern bestimmt. Die Verteilrinne vergleichmäßigt in überraschend einfacher Menge den ungleichförmig fließenden Saatgutstrom, der durch die zentralen Dosierorgane der Verteilrinne zu dosiert wird. Durch die erfindungsgemäßen Maßnahmen wird es erstmals möglich auf überraschend einfache Weise mit herkömmlichen Sämaschinen und der Verteilrinne eine einzelkornähnliche und einzelkorngleichmäßige Ablage von Saatgut ohne die tatsächliche Einzelkornvereinzelung herkömmlicher Einzelkornsämaschinen zu erzielen. Die Verteilrinne vereinzelt die von dem Dosierorgan dosierten Saatkörner. Mit einfachsten Mitteln läßt sich eine Einzelkornsämaschine für sämtliche Saatgutarten verwirklichen.

Der ungleichförmig fließende Saatgutstrom wird also am Einlauf der Verteilrinne vorrübergehend gespeichert. Unter dem Auslauf des Einlaufrohres, welche in dem Säschar oberhalb der Verteilrinne mündet, befindet sich ein ständig verändernder Saatgutvorrat. Von hier aus wird dann durch die Verteilrinne das Saatgut gezogen. Die Schichthöhe des Saatgutes in der Rinne vergleichmäßigt sich auf dem Weg zum Abwurf. Im Idealfall liegen die Körner einzeln hintereinander. Es ist jedoch auch ohne weiteres denkbar, daß in der V-förmigen Verteilrinne zwei oder drei Körner übereinanderliegen. Entscheidend ist, daß die Schichthöhe von Saatkörnern in der Verteilrinne möglich gleichmäßig ist. Selbst bei mehrfach übereinanderliegenden Körnern ergibt sich eine Vergleichmäßigung der Saatgutablage gegenüber den bisherigen bei den normalen in der Praxis angewendeten Säfahrenfahren absolut unkontrollierbaren Zustand. Durch die Vibration bzw. Schwingung der Verteilrinne wird die Reibung zwischen den Körner herabgesetzt. Gleichzeitig erfahren die Körner eine Förderung zum Abgabepunkt. Hierbei sortieren sich die Körner, wie gewünscht, so daß sie in einer Reihe hintereinanderliegen. Zumindest ist in dieser Position die bestmögliche Verteilung bzw. Ablage in äußerst einfacher und überraschender Weise erreicht. In dem Bereich, in dem die Körner noch mehrfach übereinanderliegen, entsteht ein zusätzlicher Druck, der zur Einsortierung der Körner hintereinanderführt. Bei einer höheren Schicht im Aufgabebereich der Verteilrinne wird die Fließgeschwindigkeit der Körner erhöht. Es entsteht ein flüssigkeitsähnliches Verhalten, daß am Abgabepunkt der Verteilrinne weitgehend unabhängig von der Körnerzahl pro Zeiteinheit zu einer konstanten Schichthöhe von einem Korn führt. Da dieser Vorgang nicht immer für alle Saatgüter und alle auftretenden Fördermengen mit der gleichen Frequenz und der gleichen Amplitude der Verteilrinne zu erreichen ist, ist es vorteilhaft, in Anpassung an das Saatgut, unter Umständen auch in Anpassung an die Saatmenge, Frequenz und Amplitude der Verteilrinne varieren zu können, um zu der Schichthöhe von einem Korn am Abgabepunkt zu kommen.

Besonders ist eine elektrisch erzeugte Schwingung vorteilhaft und führt zu einem besonders gleichmäßigen Saatgutstrom, wobei durch die kleinen Schwingungen das Saatgut keinen mechanischen Belastungen, die zum Verlußt der Keimfähigkeit führen könnten, ausgesetzt werden, wie es erfindungsgemäß vorgesehen ist, wenn die jeweiligen Verteilrinnen über den Antrieb in Schwingungen im Bereich von 30 bis 120 Schwingungen/Sec. versetzt werden. Um vor allem auch Getreide, wie Weizen, Gerste etc. in engen Reihenabständen ausbringen zukönnen, ist erfindungsgemäß vorgesehen, daß die Sävorrichtung nebeneinander angeordnete und in aufrechter Ebene bewegbare Säschare aufweist, und daß in den Säscharen jeweils die Verteilrinnen angeordnet sind.

Um eine möglichst genaue und gleichmäßige Ablage der von der Verteilrinne in gleichmäßiger Weise vergleichmäßigten und verteilten Saatkörner im Boden zu erreichen, sollte der Abgabepunkt der Verteilrinne so dicht, wie es sich eben konstruktiv verwirklichen läßt, über den Boden liegen, um kleine Fallgeschwindigkeit beim Auftreffen des Saatgutes auf der Saatfurche zu bekommen, so daß die Körner nicht wieder aus der Furche herausspringen können. Außerdem kann auf diese Weise die Ablage nicht durch Aufprall der Saatkörner an Furchenwand oder am Scharkörper verfälscht werden. Vorteilhaft ist eine Abwurfhöhe von etwa 3 cm.

Um die aus einem Vorratsbehälter entnommenen Samenkörner mittels einer Vorrichtung genau zu dosieren und dieses dosierte Saatgut mit gleichmäßigen Abständen im Boden abzulegen, ist vorgesehen, daß die Verteilrinnen die Vergleichsmäßigung der Saatkörnerabständen bewirken. Infolge dieser Maßnahmen wird der Verteilrinne ausschließlich die Aufgabe der Vergleichmäßigung der von dem Dosierorgan dosierten Samenkörner zugeordnet, während das Dosierorgan die auszubringene Menge an Samenkörnern bzw. Anzahl an Samenkörnern bestimmt. Die Verteilrinne vergleichmäßigt in überraschend einfacher Menge den ungleichförmig fließenden Saatgutstrom, der durch die zentralen Dosierorgane der Verteilrinne zu dosiert wird. Durch die erfindungsgemäßen Maßnahmen wird es erstmals möglich auf überraschend einfache Weise mit herkömmlichen Sämaschinen und der Verteilrinne eine einzelkornähnliche und einzelkorngleichmäßige Ablage von Saatgut ohne die tatsächliche Einzelkornvereinzelung herkömmlicher Einzelkornsämaschinen zu erzielen. Die Verteilrinne vereinzelt die von dem Dosierorgan dosierten Saatkörner. Mit einfachsten Mitteln läßt sich eine Einzelkornsämaschine für sämtliche Saatgutarten verwirklichen.

Der ungleichförmig fließende Saatgutstrom wird also am Einlauf der Verteilrinne vorrübergehend gespeichert. Unter dem Auslauf des Einlaufrohres, welche in dem Säschar oberhalb der Verteilrinne mündet, befindet sich ein sich ständig verändernder Saatgutvorrat. Von hier aus wird dann durch die Verteilrinne das Saatgut abgezogen. Die Schichthöhe des Saatgutes in der Rinne vergleichmäßigt sich auf dem Weg zum Abwurf. Im Idealfall liegen die Körner einzeln hintereinander. Es ist jedoch auch denkbar, daß in der V-förmigen Verteilrinne zwei oder drei Körner übereinanderliegen. Entscheidend ist, daß die Schichthöhe von Saatkörnern in der Verteilrinne möglichst gleichmäßig ist. Selbst bei mehrfach übereinanderliegenden Körnern ergibt sich noch eine Vergleichmäßigung der Saatgutablage gegenüber den bisherigen bei den normalen in der Praxis angewendeten Säfahrenfahren absolut unkontrollierbaren Zustand. Durch die Vibration bzw. Schwingung der Verteilrinne wird die Reibung zwischen den Körner herabgesetzt. Gleichzeitig erfahren die Körner eine Förderung zum Abgabepunkt. Hierbei sortieren sich die Körner, wie gewünscht, so daß sie in einer Reihe hintereinanderliegen. Zumindest ist in dieser Position die bestmögliche Verteilung bzw. Ablage in äußerst einfacher und überraschender Weise erreicht. In dem Bereich, in dem die Körner noch mehrfach übereinanderliegen, entsteht ein zusätzlicher Druck, der zur Einsortierung der Körner hintereinanderführt. Bei einer höheren Schicht im Aufgabebereich der Verteilrinne wird die Fließgeschwindigkeit der Körner erhöht. Es entsteht ein flüssigkeitsähnliches Verhalten, daß am Abgabepunkt der Verteilrinne weitgehend unabhängig von der Körnerzahl pro Zeiteinheit zu einer konstanten Schichthöhe von einem Korn führt. Da dieser Vorgang nicht immer für alle Saatgüter und alle auftretenden Fördermengen mit der gleichen Frequenz und der gleichen Amplitude der Verteilrinne zu erreichen ist, ist es vorteilhaft, in Anpassung an das Saatgut, unter Umständen auch in Anpassung an die Saatmenge, Frequenz und Amplitude der Verteilrinne varieren zu können, um zu der Schichthöhe von einem Korn am Abgabepunkt zu kommen.

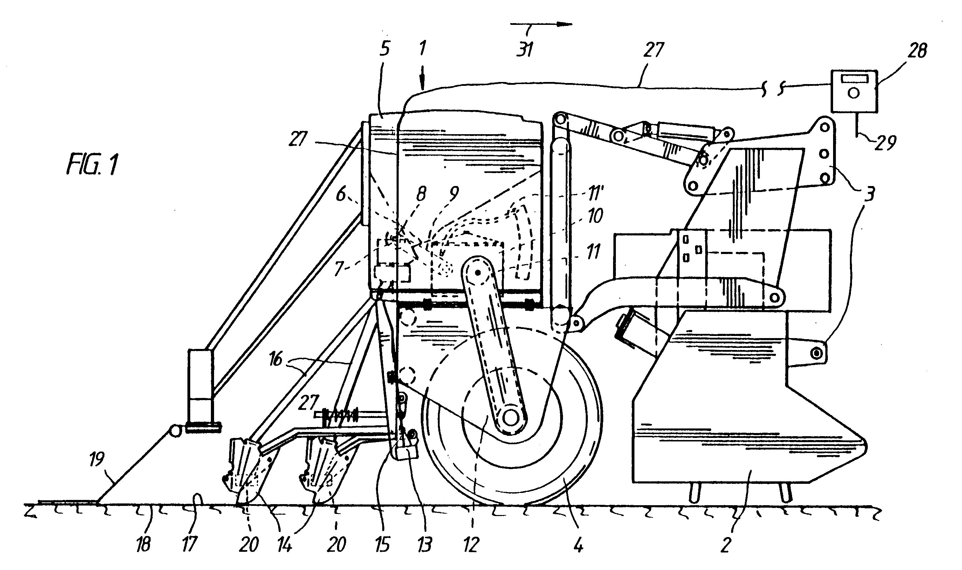

Weitere Einzelheiten der Erfindung sind den übrigen Unteransprüchen sowie der Beispielsbeschreibung und den Zeichnungen zu entnehmen. Hierbei zeigen
- Fig. 1: eine erfindungsgemäß ausgebildete fahrbare landwirtschaftliche Sävorrichtung in der Seitenansicht,

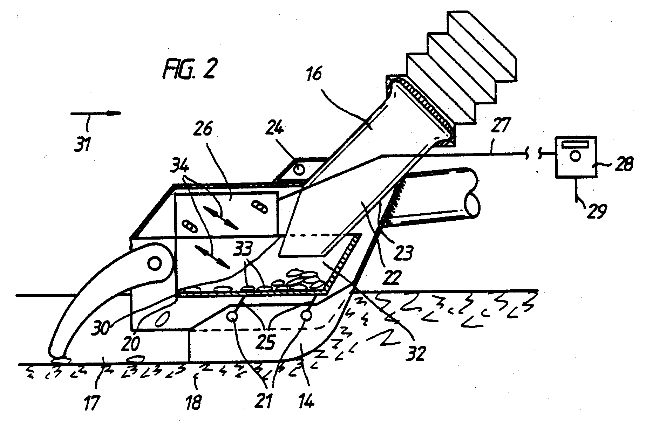

- Fig. 2: das erfindungsgemäße Säschar mit der Verteilrinne in Seitenansicht und im Schnitt sowie in vergrößerter Darstellung,
- Fig. 3: ein weiteres erfindungsgemäß ausgebildetes Säschr in der Seitenansicht und im Schnitt sowie im vergrößerter Darstellung,

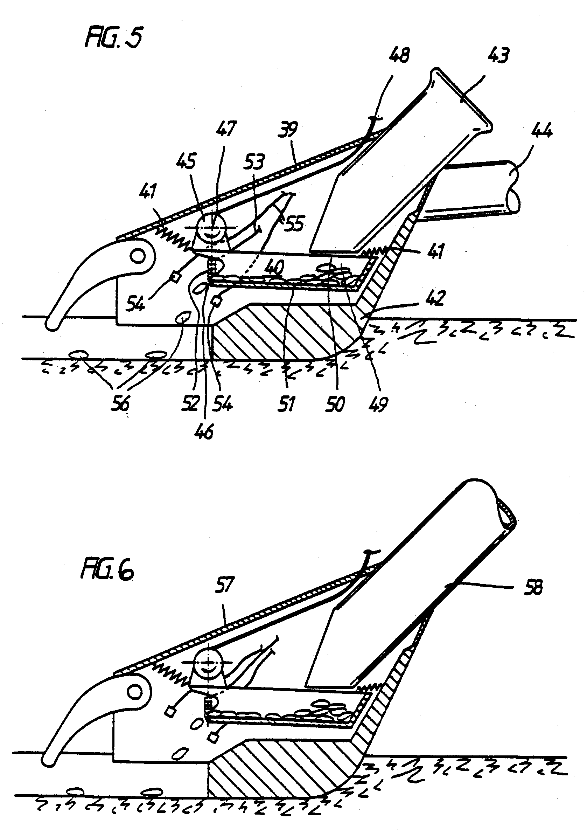

- Fig. 4: eine andere erfindungsgemäße Ausführungsform eines Säschares in der Seitenansicht und im Schnitt,
- Fig. 5: ein weiteres erfindungsgemäß ausgebildetes Säschar in der Seitenansicht und im Schnitt, wobei der Schwingungsantrieb der Schwingrinne so angeordnet ist, daß sich das Ende der Rinne in senkrechter Ebene des mittleren Bereiches des Schwingungsantriebes befindet und
- Fig. 6: das Säschar gemäß Fig. 5, wobei die Scharhalterung gleichzeitig als Saatleitungsrohr ausgebildet ist.

Die fahrbare landwirtschaftliche Sävorrichtung ist als Drillmaschine 1 ausgebildet. Diese Drillmaschine 1 kann hinter einem als Kreiselegge 2 ausgebildeten Bodenbearbeitungsgerät angeordnet sein. Die Drillmaschine 1 und Kreiselegge 2 bilden eine Bestellkombination, welche über die Dreipunktkupplungselemente 3 an den Dreipunktkraftheber eines Schleppers in bekannter und daher nicht dargestellter Weise angekuppelt werden kann. Die Drillmaschine 1 weist die als Bodenwalze 4 ausgebildete Nachlaufwalze auf, die gleichzeitig das Fahrwerk der Drillmaschine 1 bildet. Die Drillmaschine 1 weist den langgestreckten und trichterförmig ausgebildeten Vorratsbehälter 5 auf. Im unterem Bereich der langgestreckten Trichterspitze 6 sind nebeneinander die Dosierorgane 7 angeordnet. Diese Dosierorgane 7 sind als Dosierräder ausgebildet und drehfest auf der Dosierwelle 8 angeordnet, welche über den Antriebsmechanismus 9 von dem als regelbaren Antrieb 10 ausgebildeten Regelgetriebe 11 angetrieben wird, welches wiederum über den Kettentrieb 12 von der Bodenwalze 4 angetrieben wird. Über die rotierend antreibbaren und regelbaren Dosierorgane 7 wird die auszubringende Menge oder Anzahl von Samenkörner in Verbindung mit dem Regelgetriebe 11 über den Regelhebel 11' bestimmt.

An dem Rahmen 13 der Drillmaschine 1 sind die Säschare 14 über die Gelenke 15 in aufrechter Ebene bewegbar angelenkt. Die Säschare 14 sind in zwei hintereinanderliegenden Querreihen auf Lücke versetzt zueinander und nebeneinander mit einem Reihenabstand zueinander angeordnet und gleichmäßig über die Arbeitsbreite der Drillmaschine 1 verteilt. Das von den Dosierrädern 7 dosierte Saatgut gelangt über die Rohrleitungen 16 zu den Säscharen 14 und wird von diesen in den von den Säscharen 14 gezogenen Saatfurchen 17 im Boden 18 abgelegt. Hinter den Säscharen 14 ist der Saatstriegel 19 angeordnet, mithilfe dessen die in der Säfurche 17 abgelegte Samenkörner wieder mit Erde bedeckt werden.

In den Säscharen 14 sind die Verteilrinnen 20 angeordnet. Die Verteilrinnen 20 sind mittels der Schrauben 21 in den Säscharen 14 unterhalb des jeweiligen Saatguteinlaufes 22 in dem Säschar 14 befestigt. Das Säschar 14 weist den Einlaufstutzen 23 auf. Der Einlaufstutzen 23 ist mittels der Schraube 24 lösbar am Säschar 14 befestigt. Die Verteilrinne 20 ist mittels der Stütze 25 schwingend im Säschar 14 angeordnet. Die Stützen 25 weisen eine Winkel von 25 ° zur Senkrechten, bezogen auf die Ebene der Verteilrinne 20 auf. Die Verteilrinne 20 ist V-förmig im unteren Bereich ausgebildet. Des weiteren weist die Verteilrinne 20 den Schwingungsantrieb 26 auf. Mittels dieses Schwingungsantriebes 26 werden die Schwingungen für die Verteilrinnen 20 erzeugt. Dieser Schwingungsantrieb 26 wird elektrisch angetrieben. Der Schwingungsantrieb 26 erhält seine Stromversorgung und Steuerversorgung über das Kabel 27. Der Schwingungsantrieb 26 ist über das Kabel 27 mit einer elektrischen oder elektronischen Regelungseinrichtung 28 verbunden, welche auf dem Schlepper in bevorzugter Weise oder auf der Drillmaschine 1 angeordnet ist. Über das Kabel 29 erhält die Regelungseinrichtung 28 sowie der Schwingungsantrieb 26 die Stromversorgung. Mittels der elektrischen oder elektronischen Steuerungs- und Regelungseinrichtung 28 lassen sich die Schwingungen, die von dem Schwingungsantrieb 26 erzeugt werden für die Verteilrinnen 20 variieren. Somit ist die Amplitude und/oder Schwingungsfrequenz die Verteilrinnen 20 in Anpassung an das entsprechende Saatgut (Größe etc.) und/oder Saatgutmenge und/oder des jeweiligenen Saatgutabstandes variierbar.

Das Auslaufende 30 der Verteilrinne 20 weist entgegen der Fahrtrichtung 31 der Drillmaschine 1. Über den Schwingungsantrieb 26 läßt sich die Verteilrinne 20 in Schwingungen in Bereich von 30 bis 120 Schwingungen/Sec. versetzen.

Die Dosierorgane 7 sind zwischen dem Vorratsbehälter 5 und der jeweiligen Verteilrinne 20 eingeordnet. Über die rotierend antreibbaren sowie regelbaren Dosierorgane 7 wird die auszubringende Menge oder Anzahl von Samenkörnern bestimmt. Durch die Verteilrinnen 20 wird der Körnerstrom, der von dem Dosierorgan 7 erzeugt wird und den Säscharen 14 zugeführt wird, vergleichmäßigt und die Körner vereinzelt.

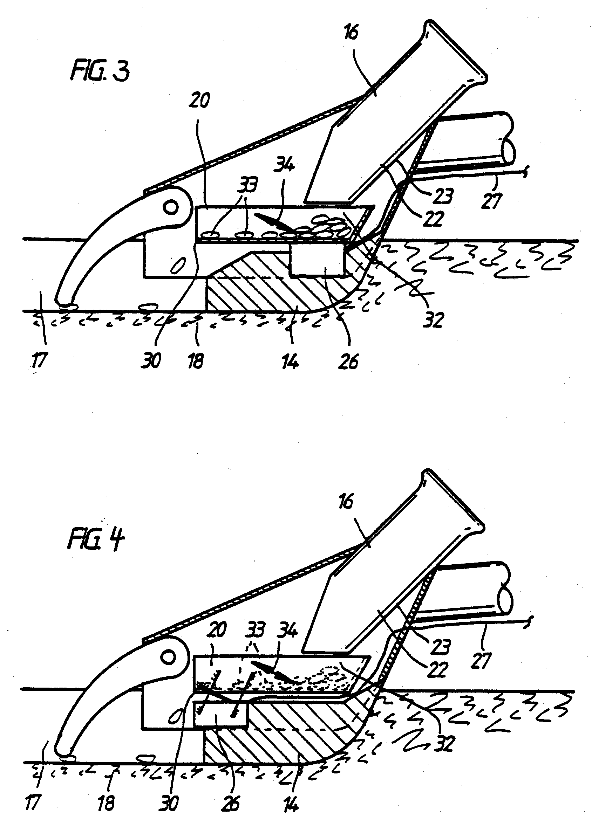

Die Fig. 3 zeigt das Säschar 14 mit der Verteilrinne 20, bei dem der Schwingungsantrieb 26 im vorderen Bereich der Verteilrinne 20 befindet. Die Fig. 5 zeigt ebenfalls das Säschar 14 mit der Verteilrinne 20, wobei der Schwingungsantrieb 26 sich hierbei im hinteren Bereich der Verteilrinne 20 befindet. Verteilrinne 20 und Schwingrinne 26 sind über Federn mit einander verbunden.

Die Aufgabe und Funktionsweise der im Säschar 14 angeordneten Verteilrinnen 20 in Verbindung mit dem Dosierorgan 7 ist folgende:
Über den regelbaren Antrieb 10 läßt sich die auszubringende Anzahl oder Menge von Saatkörnern, welche sich im Vorratsbehälter 5 befinden und von den Säscharen 14 im Boden abgelegt sollen, einstellen. Über die Saatleitungsrohre 16 wird das von den Dosierorganen 7 dosierte Saatgut den Säscharen 14 zugeführt. Unterhalb der Saatleitungsrohre 16 bzw. des Einlaufendes 22 des im Säschar 14 angeordneten Saateinleitungsstutzen 23 ist in dem Säschar 14 die Verteilrinne 20 angeordnet. Auf diese Verteilrinne 20 gelangt der von den Dosierorganen 7 dosierte Saatgutstrom. Dieser ungleichförmig fließende Saatgutstrom wird also am Einlaufpunkt 32 der Verteilrinne 20 vorrübergehend gespeichert. Unter dem Auslauf 23 des Einlaufrohres 23 befindet sich ein sich ständig verändernder Saatgutvorrat. Von hier aus wird dann durch die Verteilrinnen 20 das Saatgut 33 abgezogen. Die Schichthöhe des Saatgutes 33 in der Verteilrinne 20 vergleichmäßigt sich auf dem Weg zum Abwurfpunkt am Ablaufende 30 der Verteilrinne 20. Im Idealfall liegen dann hier die Körner einzeln hintereinander. Es ist aber auch möglich, daß in der V-förmigen Verteilrinne 20 zwei oder drei Körner übereinander liegen. Entscheidend ist, daß die Schichthöhe während des Ausbringvorganges bzw. der Ausbringzeit möglichst gleichmäßig ist. Selbst bei mehrfach übereinanderliegenden Körnern wird sich eine Vergleichmäßigung der Saatgutablage gegenüber dem bisherigen in der Praxis praktizierten, absolut unkontrollierbaren Zustand ergeben. Die Verteilrinnen 20 vereinzeln die Saatkörner; sie wirken wie die Vereinzelungsorgane bei einer Einzelkornsämaschine. Die von dem Antrieb 26 erzeugten Schwingungen, welche in Richtung der durch die Pfeile 34 angedeuteten Richtung die Verteilrinne 20 in Schwingungen versetzen, ist vorteilhaft und führt zu einem besonders gleichmäßigen Saatgutstrom sowie vereinzelten Saatkörner. Durch die kleinen Schwingungen wird das Saatgut keinen mechanischen Belastungen ausgesetzt, die zu einem Verlust der Keimfähigkeit des Saatgutes führen könnten. Das Ablaufende 30 der Verteilrinne 20 befindet sich in einer Höhe von etwa 3 cm oberhalb von dem Furchengrund der Saatfurche 17.

Hierdurch wird eine geringe Fallgeschwindigkeit der Saatkörner beim Auftreffen auf der Saatfurche 17 erreicht, so daß die Körner nicht wieder aus der Furche herausspringen können. Außerdem kann auf diese Weise die Ablage nicht durch Aufprallen der Saatkörner an der Furchenwand und am Scharkörper verfälscht werden.

Durch die Vibration bzw. Schwingung der Verteilrinne 20 in Richtung der Pfeile 34 wird die Reibung zwischen den Körnern 33 herabgesetzt. Gleichzeitig erfahren die Körner 33 eine Förderung zum Abgabepunkt am Ablaufende 30 der Verteilrinne 20. Hierbei sortieren sich die Körner 33 wie gewünscht, so daß sie in einer Reihe, also vereinzelt, hintereinanderliegen. Zumindest ist in dieser Position die bestmögliche Verteilung bzw. vereinzelte Ablage zu erreichen. In dem Bereich, in dem die Körner 33 noch mehrfach übereinanderliegen, entsteht ein zusätzlicher Druck, der zur Einsortierung der Körner 33 hintereinander führt. Bei einer höheren Schicht im Aufgabebereich der Schwingrinne 20 wird die Fließgeschwindigkeit der Körner 33 erhöht. Es soll ein flüssigkeitsähnliches Verhalten entstehen, daß am Abgabepunkt 30 der Verteilrinne 20 weitgehend unabhängig von der Körnerzahl pro Zeiteinheit zu einer konstanten Schichthöhe von einem Korn führt. Da dieser Vorgang nicht für alle Saatgüter und alle auftretenden Förder- und Körnermengen mit der gleiche Frequenz und der gleichen Amplitude der Verteilrinne 20 zu erreichen ist, ist vorgesehen, daß in Anpassung an das Saatgut, unter Umständen auch in Anpassung an die Saatmenge und den Abstand der einzelnen in der Furche 17 abgelegten Saatkörner zueinander, die Frequenz und die Amplitude der Verteilrinne 20 variiert werden kann, welches die über Steuereinrichtung 28 geschieht, um zu der Schichthöhe von einem Korn am Abgabepunkt zu kommen.

Um flexibel auf alle Forderungen aus der Praxis reagieren zu können und den Wünschen der Praxis entgegenzukommen, ist die Verteilrinne 20 lösbar und nachrüstbar in den entsprechenden Säscharen 14 einzusetzen. Es ist denkbar, daß der Aufwand von einigen Landwirten mit der Verteilrinne 20 in den Scharen 14 nur bei der Aussaat besonders anspruchsvoller Feldfrüchte gewünscht wird, insbesondere wenn diese mit kleinen Körnerzahlen pro Flächeneinheit ausgesät werden. Bei diesen kleinen Körnerzahlen werden im allgemeinen relativ große Reihenabstände, die ein vielfaches des engstmöglichen Reihenabstandes, beispielsweise bei Getreide, wie Weizen etc. von 8 cm und weniger betragen, bevorzugt. Es ist somit dann möglich, nur einzelne Schare der Sämaschine mit der Verteilrinne 20 auszurüsten und nur diesen dann Saatgut über die Dosierorgane zuzuführen. Darüberhinaus soll mit in die Erfindung eingeschlossen werden, daß die Verteilrinnen 20 bei den Säscharen 14 nachgerüstet werden können. Aus diesem Grunde sind die Drillmaschinen 1 bereits mit Säscharen 14 ausgerüstet, welche sowohl ohne die Verteilrinnen wie auch mit Verteilrinnen 20 arbeiten können.

Wenn die Säschare 14 mit den Verteilrinnen 20 eingesetzt werden, ist in dem Säschar 14 das Saatleitungsrohr 23 angeordnet.

Die Fig. 5 zeigt eine weiters Säschar 39, in welchem die Verteilrinne 40 angeordnet ist. Die Verteilrinne 40 ist mittels der Federn 41 federnd im Säscharkörper 42 aufgehängt. Das Säschar 39 weist den Einlaufstutzen 43, an dem die Saatleitung 16 angeschlossen wird, auf. Über die Scharhalterung 44 ist das Säschar 39 am Rahmen 13 der Drillmaschine in aufrechter Ebene bewegbar angelenkt. In ihrem unteren Bereich ist die Verteilrinne V-förmig ausgebildet. Oberhalb der Schwingrinne 40 ist der als Rotationsschwinger ausgebildete Schwingungsantrieb 45 derart angeordnet, daß sich das Ende 46 der Rinne 40 in senkrechter Ebene des mittleren Bereiches 47 des Schwingungsantriebes 45 befindet. Über das Kabel 48 ist der Schwingungsantrieb 45 mit der elektronischen Regelungseinrichtung 28 verbunden, welche in bevorzugter Weise auf dem die Sämaschine ziehenden Ackerschlepper angeordnet ist.

Über den regelbaren Antrieb 10 läßt sich die auszubringende Anzahl oder Menge von Saatkörnern, welche sich im Vorratsbehälter 5 befinden und von den Säscharen 39 im Boden abgelegt werden sollen, einstellen. Über die Saatleitungsrohre 16 wird das von den Dosierorganen 7 dosierte Saatgut zu den Säscharen 39 geführt. Unterhalb der Saatleitungsrohre 16 des im Säschar 39 angeordneten Saateinlaufstutzens 43 ist in dem Säschar 39 die Verteilrinne 40 angeordnet. Auf diese Verteilrinne 40 gelangt der von den Dosierorganen 7 dosierte Saatgutstrom. Dieser ungleichförmig fließende Saatgutstrom wird also am Einlaufpunkt 49 der Verteilrinne 40 vorübergehend gespeichert. Unter dem Auslaufpunkt 50 des Saatleitungsstutzens 43 befindet sich ein ständig verändernder Saatgutvorrat. Von hieraus wird das Saatgut 51 durch die Verteilrinne 40 abgezogen, wobei es sich zum Ablaufende 46 der Rinne 40 orientiert. Die Schichthöhe des Saatgutes 51 in der Verteilrinne 40 vergleichmäßigt sich auf dem Weg zur Abwurfstelle am Ablaufende 46 der Verteilrinne 40. In diesem Bereich liegen die Saatkörner 51 exakt hintereinander, so daß die Schichthöhe nur aus einem Saatkorn besteht. Diese Schichthöhe der Saatkörner 51 am Ablaufende 46 der Schwingrinne 40 wird mittels des Sensors 52 ermittelt. Der Sensor 52 ist über das Kabel 53 mit der elektronischen Regel- und/oder Steuereinrichtung 28 verbunden. Mittels der Sensoren 54, welche mit den Kabeln 55 jeweils mit der elektronischen Regel- und Steuerungseinrichtung 28 verbunden sind, wird der Abstand der einzelnen, die Abwurfstelle 46 bereits passierten Saatkörner 56 zueinander ermittelt.

Zum Erkennen der unterschiedlichen Schichthöhen der Saatkörner 51 besteht der Sensor 52 aus mehreren übereinander angeordneten Segmenten, die es gestatten, die Höhe der unterschiedlichen Schichthöhe zu messen. Die Signale der Sensoren 52 zur Ermittlung der Schichthöhe der Körner 51 in der Schwingrinne 40 werden an die elektronische Regel- und/oder Steuereinrichtung 28 übermittelt, wobei die elektronische Regel- und/oder Steuereinrichtung 28 eine entsprechende Auswertung dieser Signale vornimmt, so daß die Rechnereinheit der Regel- und/oder Steuereinrichtung 28 Rückschlüsse aus der Schichthöhe der Körner 51 im Bereich der Abwurfstelle 46 der Schwingrinne 40 ziehen kann und daß dann hieraus ermittelt wird, ob die Schichthöhe einem Korn oder mehreren übereinanderliegenden Körnern im Bereich der Abwurfstelle 46 der Schwingrinne 40 entspricht. Mittels der unmittelbar hinter der Abwurfstelle 46 der Schwingrinne 40 sich befindlichen Sensoren 54, die den Abstand der einzelnen, die Abwurfstelle 46 bereits passierten Saatkörner 56 zueinander ermitteln lasen sich gleichzeitig die ausgebrachten Saatkörner 56 zählen, welche im Boden abgelegt wurden.

Die von den an der Schwingrinne 40 angeordneten Sensoren 52 und 54 aufgenommenen Signale dienen zur Regel- und/oder Steuerung der Fördergeschwindigkeit der Schwingrinne 40, welche sich durch unterschiedliche Antriebsdrehzahlen des Schwingungsantriebes 45 ergeben. Hierzu werden zunächst die von den Sensoren 52 und 54 aufgenommenen Signale an die elektronische Regel- und/oder Steuereinrichtung 28 geliefert, hier ausgewertet und bei einer Abweichung von den gewünschten Daten erfolgt eine automatische Veränderung der Fördergeschwindigkeit durch eine Veränderung der Antriebsdrehzahl des Schwingungsantriebes 45. Ermitteln die Sensoren 52, daß die Schichthöhe der Körner 51 nicht aus einem, sondern aus mehreren übereinanderliegenden Körnern im Bereich der Abwurfstelle 46 besteht, wird die Fördergeschwindigkeit der Schwingrinne 40 erhöht, bis die Sensoren 52 wieder feststellen, daß die Schichthöhe nur noch aus einem Korn besteht. Ebenfalls führt ein geringerer Abstand der einzelnen Saatkörner nach dem Passieren der Abwurfstelle 46, welches von den Sensoren 54 festgestellt wird, zu einer Reduzierung der Fördergeschwindigkeit der Schwingrinne 40, so daß sich optimale Abwurfverhältnisse der Saatkörner ergeben und die Saatkörner 56 einen gleichmäßigen Abstand zueinander im Erdboden aufweisen. Ein zu großer Abstand der einzelnen Saatkörner 56 zueinander führen zu einer Erhöhung der Fördergeschwindigkeit der Schwingrinne 40.

Die Fig. 6 zeigt ein Säschar 57, welches sich nur dadurch vom Säschar 39 gemäß Fig. 6 unterscheidet, daß das Saatleitungsrohr 58 gleichzeitig als Scharhalterohr dient.

## Patentansprüche

1. Verfahren zum Ausbringen von Saatkörnern mit einer Drillmaschine mit nebeneinander, vorzugsweise in hintereinanderliegenden Querreihen angeordneter und in aufrechter Ebene bewegbaren Säscharen (14,39), bei der die auszusäenden Saatgüter in genau einstellbaren Mengen mittels antreibbarer Dosierorgane (7) in einer sog. Volumendosierung dem Saatgutvorrat des Vorratsbehälters (5) entnommen und über Saatleitungsrohre (16,58) den einzelnen Säscharen (14,39) zugeführt werden, dadurch gekennzeichnet, daß die Saatkörner (33) kurzzeitig in den Säscharen (14) zwischengelagert werden, und daß die Saatkörner (33) in den Säscharen (14,39) selbst in Bezug auf ihre Abstände zueinander vergleichmäßigt und anschließend in Fahrtrichtung gesehen mit annähernd gleichmäßigen Abständen im Boden (18) ausgebracht werden.

2. Verfahren nach Anspruch 1, dadurch gekennzeichnet, daß die Saatkörner (33) auf einer schwingenden Rinne (20) zwischengelagert und vom dieser vergleichmäßigt im Boden (18) abgelegt werden.

3. Verfahren nach einem oder mehreren der vorstehenden Ansprüche, dadurch gekennzeichnet, daß die Saatkörner (33) in der von dem Säschar (14), in welcher sich die Rinne (20) befindet, gezogenen Furche (17) abgelegt werden.

4. Fahrbare landwirtschaftliche Drillmaschine zur Durchführung des Verfahrens nach den Ansprüchen 1 bis 3, mit einem oder mehreren Vorratsbehältern zum Ablegen von Samenkörnern mittels Ablagevorrichtungen (14) im Boden, wobei zwischen dem Vorratsbehälter und dem Boden etwa in Fahrtrichtung ausgerichteten Rinnen, welche mittels eines oder mehrerer Antriebe zur Vergleichmäßigung in Schwingungen versetzt werden, vorhanden sind, dadurch gekennzeichnet, daß die Ablagevorrichtungen als Säfurchen in den Boden ziehende Säschare (14,39) ausgebildet sind, und daß die jeweilige Rinne (20) mit ihrem Antrieb (26) im Säschar (14,39) angeordnet ist.

5. Drillmaschine nach Anpruch 4, dadurch gekennzeichnet, daß die Drillmaschine einen Rahmen und einen Vorratsbehälter aufweist, daß an dem Rahmen in aufrechter Ebene bewegbar, in hintereinanderliegenden Querreihen die Säschare angelenkt sind, denen die sich im Vorratsbehälter befindlichen Saatkörner mittels von einem regelbaren Antriebsgetriebe angetrieben Dosierorganen in genau einstellbaren Mengen zugeführt und von den Säscharen in den Säfurchen abgelegt werden, daß die jeweilige antreibbare Schwingrinne (20) als Vergleichmäßigungsvorrichtung im Säschar (14) ausgebildet ist.

6. Drillmaschine nach Anspruch 5, dadurch gekennzeichnet, daß die Schwingrinne (20) mit ihrem Antrieb (26) in das Säschar (14) integriert angeordnt ist.

7. Drillmaschine nach Anspruch 5, dadurch gekennzeichnet, daß die Schwingrinne (20) jeweils einen Einlaufpunkt (32) und einen Abwurfpunkt (30) für das Saatgut (33) aufweist, daß der Abwurfpunkt (30) der Schwingrinne (20) gegen die Fahrtrichtung (31) weist.

8. Drillmaschine nach einem oder mehreren der vorstehenden Ansprüche, dadurch gekennzeichnet, daß die als Verteilrinnen (20) zum Vergleichmäßigen der den Säscharen (14) zu dosierten Saatkörner (33) bzw. des Körnerstromes ausgebildete Schwingrinne (20) V-förmig ausgebildet ist.

9. Drillmaschine nach einem oder mehreren der vorstehenden Ansprüche, dadurch gekennzeichnet, daß der Antrieb (26) für die Schwingrinne (20) regel- oder steuerbar ist, daß die Amplitude und/oder die Schwingungsfrequenz der Verteilrinne in Anpassung an die verschiedenen Saatkörner und/oder Ausbringmengen und/oder Abstände der einzelnen Saatkörner in der Reihe zueinander variiert werden kann.

10. Drillmaschine nach Anspruch 9, dadurch gekennzeichnet, daß die Regel- oder Steuerung (28) des Antriebes (26) für die Schwingrinne (20) in Abhängigkeit der Fahrgeschwindigkeit, mit der seit die Drillmaschine (1) über die zu besäende Fläche hinweg bewegt, erfolgt.

11. Drillmaschine nach einem oder mehreren der vorstehenden Ansprüche, dadurch gekennzeichnet, daß zwischen der Rinne (20) und dem Vorratsbehälter (5) ein antreibbares und regelbares Dosierorgan (7) angeordnet ist, über welches die auszubringende Menge oder Anzahl von Samenkörnern bestimmt wird und über welches die Samenkörner (33) der Rinne (20) zugeführt werden.

12. Drillmaschine nach einem oder mehreren der vorstehenden Ansprüche, dadurch gekennzeichnet, daß die Sävorrichtung (1) mehrere nebeneinander angeordnete und in aufrechter Ebene bewegbare Säschare (14) aufweist, und daß in diesen Säscharen (14) jeweils die Verteilrinnen (20) angeordnet sind.

13. Drillmaschine nach einem oder mehreren der vorstehenden Ansprüche, dadurch gekennzeichnet, daß die Rinne (20) und das Antriebs- und/oder Motorgehäuse (26) zum Erzeugen der Schwingungen der Rinne (20) einstückig ausgebildet sind.

14. Drillmaschine nach Anspruch 5, dadurch gekennzeichnet, daß die einstückig ausgebildete Rinne (20) und das Motorgehäuse (26) insgesamt schwingbar gelagert sind.

15. Drillmaschine nach Anspruch 5, dadurch gekennzeichnet, daß die Rinne (20) schwingbar gelagert ist, während das Antriebs- und/oder Motorgehäuse (26) fest mit dem Säschar (14) verbunden ist.

16. Drillmaschine nach einem oder mehreren der vorstehenden Ansprüche, dadurch gekennzeichnet, daß die Rinne (20) und der Antrieb (26) getrennt ausgebildet sind, wobei die Rinne (20) schwingend gelagert ist.

17. Drillmaschine nach einem oder mehreren der vorstehenden Ansprüche, dadurch gekennzeichnet, daß in der Scharspitze des Säschares (14) ein Hohlraum sich befindet, daß in diesem Hohlraum der Antrieb und/oder Motor (26) zum Antrieb der Rinne (20) angeordnet ist.

18. Drillmaschine nach einem oder mehreren der vorstehenden Ansprüche, dadurch gekennzeichnet, daß der Antrieb und/oder Motor (26) bzw. das Antriebs- und/oder Motorgehäuse in einem von der Scharspitze gebildeten Gehäuse angeordnet ist.

19. Drillmaschine nach Anspruch 9, dadurch gekennzeichnet, daß der Antrieb und/oder Motor (26) in die Scharspitze integriert ist.

20. Drillmaschine nach einem oder mehreren der vorstehenden Ansprüche, dadurch gekennzeichnet, daß die Rinne (20) in die Scharspitze integriert ist und schwingend gegenüber der Scharspitze gelagert ist.

21. Drillmaschine nach einem oder mehreren der vorstehenden Ansprüche, dadurch gekennzeichnet, daß die Rinne (20) und der Motor (26) einstückig in die Scharspitze integriert sind.

22. Drillmaschine nach einem oder mehreren der vorstehenden Ansprüche, dadurch gekennzeichnet, daß die Rinne (20) und das Motorgehäuse einstückig in das Schargehäuse integriert sind.

23. Drillmaschine nach einem oder mehreren der vorstehenden Ansprüche, dadurch gekennzeichnet, daß der Motor und/oder Antrieb (26) sich am hinteren Ende der Rinne (20) befindet.

24. Drillmaschine nach einem oder mehreren der vorstehenden Ansprüche, dadurch gekennzeichnet, daß der Schwingungsantrieb (26) sich im vorderen Bereich der Schwingrinne (20) befindet.

25. Drillmaschine nach einem oder mehreren der vorstehenden Ansprüche, dadurch gekennzeichnet, daß die Rinne (20) schwingbar an der Scharspitze befestigt ist und daß die Befestigung über Federn erfolgt.

26. Drillmaschine nach einem oder mehreren der vorstehenden Ansprüche, dadurch gekennzeichnet, daß die Federn einstückig an die aus Kunststoff hergestellte Rinne angespritzt sind.

27. Drillmaschine nach einem oder mehreren der vorstehenden Ansprüche, dadurch gekennzeichnet, daß die Federn an der Scharspitze oder am Scharghäuse angeordnet sind.

28. Drillmaschine nach einem oder mehreren der vorstehenden Ansprüche, dadurch gekennzeichnet, daß die Scharspitze aus Kunststoff, insbesondere aus einem PU-Material hergestellt ist.

29. Drillmaschine nach einem oder mehreren der vorstehenden Ansprüche, dadurch gekennzeichnet, daß die Anordnung der Rinne (20) mit dem Schwingungsantrieb (26) für alle Schartypen und Säverfahren vorgesehen ist.

30. Drillmaschine nach einem oder mehreren der vorstehenden Ansprüche, dadurch gekennzeichnet, daß die Rinne (20) mit dem Schwingungsantrieb (26) in sog. Normalsäscharen, Breitsäscharen, Roll- oder Scheibensäscharen etc. anzuordnen ist.

31. Drillmaschine nach einem oder mehreren der vorstehenden Ansprüche, dadurch gekennzeichnet, daß die Rinne (20) mit dem Schwingungsantrieb (26) lösbar in den Säscharen (14) angeordnet ist.

32. Drillmaschine nach einem oder mehreren der vorstehenden Ansprüche, dadurch gekennzeichnet, daß die Säschare (14) mit der Rinne (20) und dem Schwingungsantrieb (26) auf Normalsäschare aufsetzbar sind.

33. Drillmaschine nach einem oder mehreren der vorstehenden Ansprüche, dadurch gekennzeichnet, daß Säschare (14) mit der Rinne (20) und dem Schwingungsantrieb (26) gegen Säschare (14) ohne Rinne und Schwingungsantrieb leicht austauschbar am Scharhalter bzw. am Rahmen der Sävorrichtung (1) angeordnet sind.

34. Drillmaschine nach einem oder mehreren der vorstehenden Ansprüche, dadurch gekennzeichnet, daß die jeweiligen Schwingrinnen (20) über den Antrieb (26) in Schwingungen im Bereich von 30 bis 120 Schwingungen pro Sekunde versetzt werden.

35. Drillmaschine nach einem oder mehreren der vorstehenden Ansprüche, dadurch gekennzeichnet, daß die Schwingungen für die Schwingungsrinnen (20) von einem elektroschen/elektronischen sowie geregelten Schwingungsantrieb (26) erzeugt werden.

36. Drillmaschine nach Anspruch 4, dadurch gekennzeichnet, daß der Schwingungsantrieb (45) der Schwingrinne (40) so angeordnet ist, daß sich das Ende (46) der Rinne (40) in senkrechter Ebene des mittleren Bereiches (47) des Schwingungsantriebes (45) befindet.

37. Drillmaschine nach Anspruch 36, dadurch gekennzeichnet, daß der Schwingungsantrieb (45) als Rotationsschwinger ausgebildet ist.

38. Drillmaschine nach Anspruch 36, dadurch gekennzeichnet, daß der Schwingungsantrieb (45) ein Unwuchtmotor ist.

39. Drillmaschine nach Anspruch 36, dadurch gekennzeichnet, daß der Schwingungsantrieb (45) der Schwingrinne (40) oberhalb der Schwingrinne (40) angeordnet ist.

40. Drillmaschine nach einem oder mehreren der vorstehenden Ansprüche, dadurch gekennzeichnet, daß der Schwingungsantrieb (45) für die Schwingrinne (40) regel- und/oder steuerbar ist, daß die Amplitude und/oder die Schwingungs- frequenz der Verteilrinne (40) in Anpassung an die verschiedenen Saatkörner und/oder Ausbringmengen und/oder Abstände der einzelnen Saatkörner (51,56) in der Reihe zueinander variiert werden kann.

41. Drillmaschine nach einem oder mehreren der vorstehenden Ansprüche, dadurch gekennzeichnet, daß die Regel- und/oder Steuerung des Schwingungsantriebes (45) für die Schwingrinne (40) in Abhängigkeit der Fahrgeschwindigkeit mit der sich die Sävorrichtung über die zu besäende Fläche hinweg bewegt, erfolgt.

42. Drillmaschine nach einem oder mehreren der vorstehenden Ansprüche, dadurch gekennzeichnet, daß sich Sensoren (52) zur Ermittlung der Schichthöhe der Körner (51) in der Schwingrinne (40) im unmittelbaren Bereich vor der Abwurfstelle (46) der Schwingrinne (40) befinden.

43. Drillmaschine nach einem oder mehreren der vorstehenden Ansprüche, dadurch gekennzeichnet, daß sich unmittelbar hinter der Abwurfstelle (46) der Schwingrinne (40) für die Saatkörner (56) ein Sensor (54) befindet, der den Abstand der einzelnen, die Abwurfstelle (46) bereits passierten Saatkörner (56) zueinander ermittelt.

44. Drillmaschine nach einem oder mehreren der vorstehenden Ansprüche, dadurch gekennzeichnet, daß sich mittels der an der Abwurfstelle (46) oder im Bereich der Rinne (40) angeordneter Sensoren (52,54) die Korngröße der Saatkörner (51,56) erfassen läßt.

45. Drillmaschine nach einem oder mehreren der vorstehenden Ansprüche, dadurch gekennzeichnet, daß die Signale der Sensoren (52) zur Ermittlung der Schichthöhe der Körner (51) in der Schwingrinne (40) an die elektronische Regel- und/oder Steuereinrichtung (28) übermittelt werden, und daß die elektronische Regel- und/oder Steuereinrichtung (28) eine entsprechende Auswertung dieser Signale vornimmt, so daß die Rechnereinheit der Regel- und/oder Steuereinrichtung (28) Rückschlüsse aus der Schichthöhe der Körner (51) im Bereich der Abwurfstelle (46) der Schwingrinne (40) zeihen kann, und daß dann hieraus ermittelt wird, ob die Schichthöhe einem Korn oder mehreren Körnern im Bereich der Abwurfstelle (46) der Schwingrinne (40) entspricht.

46. Drillmaschine nach einem oder mehreren der vorstehenden Ansprüche, dadurch gekennzeichnet, daß die elektronische Regel- und/oder Steuereinrichtung (28) mit dem elektrisch oder elektronisch regel- und/oder steuerbaren Schwingungsantrieb (45) für die Schwingrinne (40) gekoppelt ist, und daß die von den an der Schwingrinne (40) angeordneten Sensoren (52,54) aufgenommenen Signale zur Regel- und/oder Steuerung der Fördergeschwindigkeit der Schwingrinne (40) durch eine entsprechende Verlängerung der Antriebsdrehzahl des Schwingungsantriebes (45) dienen.

47. Drillmaschine nach einem oder mehreren der vorstehenden Ansprüche, dadurch gekennzeichnet, daß die von den an der Schwingrinne (40) angeordneten Sensoren (52,54) aufgenommenen Signale zur Überwachung und Regelung der Fördergeschwindigkeit der Schwingrinne (40) dienen, und daß die von den Sensoren (52,54) aufgenommenen, an die elektronische Regel- und/oder Steuereinrichtung (28) weitergeleiteten Signale zum Variieren der Fördergeschwindigkeit der Körner (51) in der Schwingrinne, (40) zur Erzielung optimaler Abwurfverhältnisse (ein Korn hinter dem anderen), dienen.

48. Drillmaschine nach einem oder mehreren der vorstehenden Ansprüche, dadurch gekennzeichnet, daß die Korngröße des jeweils auszusäenden Saatgutes in den Rechner der elektronischen Regel- und/oder Steuereinrichtung (28) einzugeben ist, so daß der Rechner anhand der von den Sensoren (52) gelieferten Signale Rückschlüsse aus der Schichthöhe der Körner der Schwingrinne (40) ziehen kann, ob die Schichthöhe einem Korn oder mehreren Körnern entspricht.

49. Drillmaschine nach einem oder mehreren der vorstehenden Ansprüche, dadurch gekennzeichnet, daß die Sensoren (52) zur Ermittlung der Schichthöhe der Saatkörner (51) im Abwurfbereich (46) der Schwingrinne (40) und des Abstandes der einzelnen Saatkörner (51,56) zueinander nur an der Schwingrinne (40) von zumindest einem einzigen Säschar (14,39,57) angeordnet sind.

50. Drillmaschine nach einem oder mehreren der vorstehenden Ansprüche, dadurch gekennzeichnet, daß die Sensoren (52,54) zur Ermittlung der Schichthöhe der Saatkörner (51) im Abwurfbereich (46) der Schwingrinne (40) und des Abstandes der einzelnen Saatkörner (51,56) zueinander an vereinzelten, über die Arbeitsbreite der Sävorrichtung verteilte, Säschare (14,39,57) oder an allen Säscharen (14,39,57) der Sävorrichtung angeordnet sind.

51. Drillmaschine nach einem oder mehreren der vorstehenden Ansprüche, dadurch gekennzeichnet, daß der Sensor (54) zur Ermittlung des Abstandes der einzelnen Saatkörner zueinander zum Zählen der ausgebrachten Saatkörner dient.

52. Drillmaschine nach Anspruch 4, dadurch gekennzeichnet, daß die Rinnen als Verteilrinnen (20) zum vergleichmäßigen der Saatkörner bzw. des Körnerstromes ausgebildet, und daß zwischen dem Vorratsbehälter (5) und der jeweiligen Verteilrinne (20) ein rotierend antreibbares und regelbares Dosierorgan (7) eingeordnet ist, über welches die auszubringende Menge oder Anzahl von Samenkörnern bestimmt wird.

53. Drillmaschine nach einen oder mehreren der vorstehenden Ansprüche, dadurch gekennzeichnet, daß die Schwingungen der Verteilrinne (20) eine Bewegungsrichtung haben, die um ca. 25° zur Waagerechten geneigt ist.

54. Drillmaschine nach einem oder mehreren der vorstehenden Ansprüche, dadurch gekennzeichnet, daß der Abwurfpunkt der Saatkörner (33) nicht höher als ca. 5 cm über dem tiefsten Punkt der Scharspitze des Säschares (14) liegt.

55. Drillmaschine nach einem oder mehreren der vorstehenden Ansprüche, dadurchgekennzeichnet, daß die Rinne (20) einen V-förmigen Querschnitt hat.

56. Drillmaschine nach einem oder mehreren der vorstehenden Ansprüche, dadurch gekennzeichnet, daß Saatgutmenge bzw. Körner, Amplitude und Frequenz der Schwingung so aufeinander abgestimmt sind, daß die Körner (33) sich hintereinander im tiefsten Punkt der V-förmigen Rinne (20) einordnen.

## Claims

1. Method of distributing seeds utilising a drill having sowing coulters (14, 39), which are disposed adjacent one another, preferably in transverse rows situated one behind the other, and are displaceable in a vertical plane, wherein the seeds to be sown are removed from the seed supply of the hopper (5) in accurately adjustable quantities by means of drivable metering members (7) in a so-called volume metering operation and are supplied to the individual sowing coulters (14, 39) by means of seed conducting tubes (16, 58), characterised in that the seeds (33) are intermediately stored for a brief period in the sowing coulters (14), and in that the seeds (33) in the sowing coulters (14, 39) themselves are evenly distributed in respect of their spacings relative to one another and are subsequently distributed in the ground (18) with approximately uniform spacings therebetween when viewed with respect to the direction of travel.

2. Method according to claim 1, characterised in that the seeds (33) are intermediately stored on a vibrating channel (20) and are deposited in the ground (18) by said channel in an evenly distributed manner.

3. Method according to one or more of the preceding claims, characterised in that the seeds (33) are deposited in the furrow (17), which has been formed by the sowing coulter (14), in which the channel (20) is situated.

4. Transportable, agricultural drill for accomplishing the method according to claims 1 to 3, having one or more hoppers for depositing seeds in the ground by means of depositing devices (14), channels being provided between the hopper and the ground and being orientated substantially in the direction of travel, which channels are set in vibration by means of one or more drives for even distribution, characterised in that the depositing devices are in the form of sowing coulters (14, 39), which form furrows in the ground, and in that the respective channel (20) is disposed with its drive (26) in the sowing coulter (14, 39).

5. Drill according to claim 4, characterised in that the drill includes a frame and a hopper, in that the sowing coulters are pivotally mounted on the frame so as to be displaceable in a vertical plane and in transverse rows situated one behind the other, the seeds in the hopper being supplied to said coulters in accurately adjustable quantities by means of metering members, which are driven by a regulatable drive transmission unit, and are deposited in the furrows by the sowing coulters, and in that the respective drivable vibrating channel (20) is provided as a device for achieving even distribution in the sowing coulter (14).

6. Drill according to claim 5, characterised in that the vibrating channel (20) is disposed with its drive (26) so as to be incorporated in the sowing coulter (14).

7. Drill according to claim 5, characterised in that each vibrating channel (20) has a respective inlet point (32) and a respective discharge point (30) for the seeds (33), and in that the discharge point (30) of the vibrating channel (20) is orientated oppositely to the direction of travel (31).

8. Drill according to one or more of the preceding claims, characterised in that the vibrating channel (20), which is in the form of a distributing channel (20) for evenly distributing the seeds (33) to be metered to the sowing coulters (14), or respectively the flow of seeds, has a V-shaped configuration.

9. Drill according to one or more of the preceding claims, characterised in that the drive (26) for the vibrating channel (20) is regulatable or controllable, and in that the amplitude and/or the vibration frequency of the distributing channel may be varied in adaptation to the various seeds and/or distribution quantities and/or spacings between the individual seeds in the row.

10. Drill according to claim 9, characterised in that the regulating or controlling device of the drive (26) for the vibrating channel (20) operates in dependence on the travel speed at which the drill (1) moves over the area to be sown.

11. Drill according to one or more of the preceding claims, characterised in that a drivable and regulatable metering member (7) is disposed between the channel (20) and the hopper (5), the quantity to be distributed or the number of seeds being determined by said metering member, and the seeds (33) being supplied to the channel (20) by means of said metering member.

12. Drill according to one or more of the preceding claims, characterised in that the seed drill (1) includes a plurality of sowing coulters (14), which are disposed adjacent one another and are displaceable in a vertical plane, and in that the distributing channels (20) are each disposed in these respective sowing coulters (14).

13. Drill according to one or more of the preceding claims, characterised in that the channel (20) and the drive- and/or motor housing (26) for producing the vibrations of the channel (20) are integrally formed.

14. Drill according to claim 5, characterised in that the integrally formed channel (20) and the motor housing (26) are mounted so as to be generally vibratable.

15. Drill according to claim 5, characterised in that the channel (20) is mounted in a vibratable manner, while the drive- and/or motor housing (26) is securedly connected to the sowing coulter (14).

16. Drill according to one or more of the preceding claims, characterised in that the channel (20) and the drive (26) are formed separately, the channel (20) being mounted in a vibratory manner.

17. Drill according to one or more of the preceding claims, characterised in that a cavity is situated in the coulter tip of the sowing coulter (14), and in that the drive and/or motor (26) for driving the channel (20) is disposed in this cavity.

18. Drill according to one or more of the preceding claims, characterised in that the drive and/or motor (26), or respectively the drive- and/or motor housing, is disposed in a housing formed by the coulter tip.

19. Drill according to claim 9, characterised in that the drive and/or motor (26) is incorporated in the coulter tip.

20. Drill according to one or more of the preceding claims, characterised in that the channel (20) is incorporated in the coulter tip and is mounted opposite the coulter tip in a vibratory manner.

21. Drill according to one or more of the preceding claims, characterised in that the channel (20) and the motor (26) are integrally incorporated in the coulter tip.

22. Drill according to one or more of the preceding claims, characterised in that the channel (20) and the motor housing are integrally incorporated in the coulter housing.

23. Drill according to one or more of the preceding claims, characterised in that the motor and/or drive (26) is situated at the rear end of the channel (20).

24. Drill according to one or more of the preceding claims, characterised in that the vibratory drive (26) is situated in the front region of the vibrating channel (20).

25. Drill according to one or more of the preceding claims, characterised in that the channel (20) is mounted on the coulter tip in a vibratable manner, and in that the mounting is effected by means of springs.

26. Drill according to one or more of the preceding claims, characterised in that the springs are integrally moulded with the channel, which is formed from plastics material.

27. Drill according to one or more of the preceding claims, characterised in that the springs are disposed on the coulter tip or on the coulter housing.

28. Drill according to one or more of the preceding claims, characterised in that the coulter tip is formed from plastics material, more especially from a PU material.

29. Drill according to one or more of the preceding claims, characterised in that the provision of the channel (20) with the vibratory drive (26) is envisaged for all couter types and sowing methods.

30. Drill according to one or more of the preceding claims, characterised in that the channel (20) is to be disposed with the vibratory drive (26) in so-called normal sowing coulters, wide sowing coulters, roller-type or disc-type sowing coulters, etc.

31. Drill according to one or more of the preceding claims, characterised in that the channel (20) is disposed with the vibratory drive (26) so as to be detachable in the sowing coulters (14).

32. Drill according to one or more of the preceding claims, characterised in that the sowing coulters (14), provided with the channel (20) and the vibratory drive (26), are attachable to normal sowing coulters.

33. Drill according to one or more of the preceding claims, characterised in that sowing coulters (14), provided with the channel (20) and the vibratory drive (26), are disposed on the coulter holder, or respectively on the frame of the seed drill (1), so as to be easily interchangeable with sowing coulters (14) not provided with a channel and vibratory drive.

34. Drill according to one or more of the preceding claims, characterised in that the respective vibrating channels (20) are set in vibration, in the range of between 30 and 120 vibrations per second, by the drive (26).

35. Drill according to one or more of the preceding claims, characterised in that the vibrations for the vibrating channels (20) are produced by an electric/electronic and regulated vibratory drive (26).

36. Drill according to claim 4, characterised in that the vibratory drive (45) of the vibrating channel (40) is so disposed that the end (46) of the channel (40) is situated in a vertical plane of the central region (47) of the vibratory drive (45).

37. Drill according to claim 36, characterised in that the vibratory drive (45) is in the form of a rotational vibrator.

38. Drill according to claim 36, characterised in that the vibratory drive (45) is an out-of-balance motor.

39. Drill according to claim 36, characterised in that the vibratory drive (45) of the vibrating channel (40) is disposed above the vibrating channel (40).

40. Drill according to one or more of the preceding claims, characterised in that the vibratory drive (45) for the vibrating channel (40) is regulatable and/or controllable, and in that the amplitude and/or the vibration frequency of the distributing channel (40) may be varied in adaptation to the various seeds and/or distribution quantities and/or spacings between the individual seeds (51, 56) in the row.

41. Drill according to one or more of the preceding claims, characterised in that the regulating and/or controlling device of the vibratory drive (45) for the vibrating channel (40) operates in dependence on the travel speed at which the seed drill moves over the area to be sown.

42. Drill according to one or more of the preceding claims, characterised in that sensors (52) for determining the layer height of the seeds (51) in the vibrating channel (40) are situated in the immediate region in front of the discharge location (46) of the vibrating channel (40).

43. Drill according to one or more of the preceding claims, characterised in that a sensor (54) is situated immediately behind the discharge location (46) of the vibrating channel (40) for the seeds (56) and determines the spacing between the individual seeds (56), which have already passed the discharge location (46).

44. Drill according to one or more of the preceding claims, characterised in that the particle size of the seeds (51, 56) can be detected by means of the sensors (52, 54) disposed at the discharge location (46) or in the region of the channel (40).

45. Drill according to one or more of the preceding claims, characterised in that the signals of the sensors (52) for determining the layer height of the seeds (51) in the vibrating channel (40) are transmitted to the electronic regulating and/or controlling device (28), and in that the electronic regulating and/or controlling device (28) effects an appropriate evaluation of these signals, so that the computer unit of the regulating and/or controlling device (28) can draw conclusions from the layer height of the seeds (51) in the region of the discharge location (46) of the vibrating channel (40), and so that it is then determined therefrom whether the layer height corresponds to one seed or a plurality of seeds in the region of the discharge location (46) of the vibrating channel (40).

46. Drill according to one or more of the preceding claims, characterised in that the electronic regulating and/or controlling device (28) is connected to the electrically or electronically regulatable and/or controllable vibratory drive (45) for the vibrating channel (40), and in that the signals, picked-up by the sensors (52, 54) disposed on the vibrating channel (40), serve to regulate and/or control the speed of conveyance of the vibrating channel (40) by appropriately changing the driving speed of the vibratory drive (45).

47. Drill according to one or more of the preceding claims, characterised in that the signals, picked-up by the sensors (52, 54) disposed on the vibrating channel (40), serve to monitor and regulate the speed of conveyance of the vibrating channel (40), and in that the signals, picked-up by the sensors (52, 54) and passed to the electronic regulating and/or controlling device (28), serve to vary the speed of conveyance of the seeds (51) in the vibrating channel (40) in order to achieve optimum discharge conditions (one seed behind the other).

48. Drill according to one or more of the preceding claims, characterised in that the particle size of each seed to be sown is to be inputted into the computer of the electronic regulating and/or controlling device (28), so that the computer can draw conclusions from the layer height of the seeds of the vibrating channel (40), with reference to the signals delivered by the sensors (52), as to whether the layer height corresponds to one seed or a plurality of seeds.

49. Drill according to one or more of the preceding claims, characterised in that the sensors (52) for determining the layer height of the seeds (51) in the discharge region (46) of the vibrating channel (40) and the spacing between the individual seeds (51. 56) are disposed only on the vibrating channel (40) of at least one single sowing coulter (14, 39, 57).

50. Drill according to one or more of the preceding claims, characterised in that the sensors (52, 54) for determining the layer height of the seeds (51) in the discharge region (46) of the vibrating channel (40) and the spacing between the individual seeds (51, 56) are disposed on singled-out sowing coulters (14, 39, 57), which are distributed over the working width of the seed drill, or on all of the sowing coulters (14, 39, 57) of the seed drill.

51. Drill according to one or more of the preceding claims, characterised in that the sensor (54) for determining the spacing between the individual seeds serves to count the discharged seeds.

52. Drill according to claim 4, characterised in that the channels are in the form of distributing channels (20) for the even distribution of the seeds, or respectively of the flow of seeds, and in that a rotatably drivable and regulatable metering member (7) is inserted between the hopper (5) and the respective distributing channel (20), the quantity to be distributed or the number of seeds being determined by said metering member.

53. Drill according to one or more of the preceding claims, characterised in that the vibrations of the distributing channel (20) have a direction of movement which is inclined by approx. 25° relative to the horizontal.

54. Drill according to one or more of the preceding claims, characterised in that the discharge point of the seeds (33) does not lie higher than approx. 5 cm above the lowest point of the coulter tip of the sowing coulter (14).

55. Drill according to one or more of the preceding claims, characterised in that the channel (20) has a V-shaped cross-section.

56. Drill according to one or more of the preceding claims, characterised in that the quantity of seeds, or respectively the seeds, amplitude and frequency of the vibration, are so adapted to one another that the seeds (33) are inserted behind one another in the lowest point of the V-shaped channel (20).

## Revendications

1. Procédé de distribution de graines de semence à l'aide d'un semoir, comportant des socs de semoir (14, 39) mobiles dans un plan vertical, ces socs étant juxtaposés, de préférence dans des rangées transversales adjacentes, les semences à distribuer étant prises suivant des quantités réglables de manière précise par des organes de dosage entraînées (7) suivant un dosage dit volumétrique de la réserve de semence contenue dans le réservoir (5) pour être transférée par des conduites à semence (16, 58) vers les différents socs de semoir (14, 39), procédé caractérisé en ce qu'on stocke provisoirement et pendant une courte durée les graines de semence (33) dans les socs de semoir (14) et en ce que les graines (33) sont régularisées automatiquement dans les socs (14, 39) quant à leur intervalle pour être déposées dans le sol (18) à des intervalles relativement réguliers, selon la direction de déplacement.

2. Procédé selon la revendication 1, caractérisé en ce qu'on stocke de façon provisoire les graines de semence (33) dans une goulotte oscillante (20) qui les dépose dans le sol (18) après régularisation.

3. Procédé selon l'une ou plusieurs des revendications précédentes, caractérisé en ce que les graines de semence (33) sont déposées dans le sillon (17), tracé, par la goulotte (20) qui se trouve dans le soc de semoir (14).

4. Semoir agricole mobile pour la mise en oeuvre du procédé selon les revendications 1 à 3, avec un ou plusieurs réservoirs pour déposer des graines de semence à l'aide de dispositifs de dépôt (14) dans le sol, des goulottes alignées sensiblement dans la direction de déplacement et qui sont mises en oscillation par un ou plusieurs moyens d'entraînement pour assurer la régularisation, se trouvent entre le sol et le réservoir, semoir caractérisé en ce que les dispositifs de dépôt sont en forme de socs de semoir (14, 39) qui tirent des sillons à semence dans le sol et chaque goulotte (20) et son moyen d'entraînement (26) sont logés dans le soc de semoir (14, 39).

5. Semoir selon la revendication 4, caractérisé en ce qu'il comprend un châssis et un réservoir, le châssis portant de manière articulée des socs de semoir répartis dans des rangées transversales disposées l'une derrière l'autre, ces socs étant mobiles dans des plans verticaux, ces socs recevant les graines de semence du réservoir par l'intermédiaire d'organes de dosage entraînés par un moyen d'entraînement réglable, suivant des quantités réglables de manière précise pour être déposées par les socs dans les sillons, la goulotte oscillante (20) entraînée, respective, étant réalisée comme organe de régularisation dans le soc de semoir (14).

6. Semoir selon la revendication 5, caractérisé en ce que la goulotte oscillante (20) et son moyen d'entraînement (26) sont intégrés dans le soc de semoir (14).

7. Semoir selon la revendication 5, caractérisé en ce que la goulotte oscillante (20) comprend chaque fois un point d'entrée (32) et un point d'éjection (30) pour la semence (33), le point d'éjection (30) de la goulotte oscillante (20) étant opposé à la direction de déplacement (31).

8. Semoir selon une ou plusieurs des revendications précédentes, caractérisé en ce que la goulotte oscillante (20) formant la goulotte distributrice (20) pour régulariser le flux de graines ou de graines de semence (33) dosées vers les socs de semoir (14) est en forme de V.

9. Semoir selon une ou plusieurs des revendications précédentes, caractérisé en ce que l'entraînement (26) de la goulotte oscillante (20) est réglable ou commandé et l'amplitude et/ou la fréquence des oscillations de la goulotte distributrice est modifié pour s'adapter aux différents types de graines de semence et/ou aux quantités à distribuer et/ou à l'intervalle entre les différentes graines dans chaque rangée.

10. Semoir selon la revendication 9, caractérisé en ce que le dispositif de régulation ou de commande (28) de l'entraînement (26) de la goulotte oscillante (20) se fait en fonction de la vitesse de déplacement à laquelle le semoir (20) parcourt la surface ensemencée.

11. Semoir selon une ou plusieurs des revendications précédentes, caractérisé en ce qu'entre la goulotte (20) et le réservoir (5) il y a un organe de dosage (7) entraîné et réglable, qui définit la quantité ou le nombre de graines de semence à distribuer et qui fournit les graines de semence (33) à la goulotte (20).

12. Semoir selon une ou plusieurs des revendications précédentes, caractérisé en ce qu'il comporte plusieurs socs de semoir (14) mobiles dans un plan vertical, ces socs étant juxtaposés et chaque soc (14) comporte une goulotte distributrice (20).

13. Semoir selon une ou plusieurs des revendications précédentes, caractérisé en ce que la goulotte (20) et le carter (26) du moyen d'entraînement et/ou du moteur pour générer les oscillations de la goulotte (20) est en une seule pièce.

14. Semoir selon la revendication 5, caractérisé en ce que la goulotte (20) en une seule pièce et le carter (26) du moteur sont montés globalement oscillants.

15. Semoir selon la revendication 5, caractérisé en ce que la goulotte (20) est montée oscillante et le carter du moyen d'entraînement et/ou du moteur (26) est solidaire du soc de semoir (14).

16. Semoir selon l'une ou plusieurs des revendications précédentes, caractérisé en ce que la goulotte (20) et le moyen d'entraînement (26) sont séparés, la goulotte (20) étant montée oscillante.

17. Semoir selon une ou plusieurs des revendications précédentes, caractérisé par une cavité réalisée dans la pointe du soc de semoir (14) et cette cavité loge le moyen d'entraînement et/ou le moteur (26) entraînant la goulotte (20).

18. Semoir selon une ou plusieurs des revendications précédentes, caractérisé en ce que le moyen d'entraînement et/ou le moteur (26) ou le carter du moyen d'entraînement et/ou du moteur sont logés dans un boîtier formé par la pointe du soc.

19. Semoir selon la revendication 9, caractérisé en ce que le moyen d'entraînement et/ou le moteur (26) sont intégrés dans la pointe du soc.

20. Semoir selon une ou plusieurs des revendications précédentes, caractérisé en ce que la goulotte (20) est intégrée à la pointe du soc et est montée oscillante par rapport à la pointe du soc.

21. Semoir selon une ou plusieurs des revendications précédentes, caractérisé en ce que la goulotte (20) et le moteur (26) sont intégrés en une seule pièce dans la pointe du soc.

22. Semoir selon une ou plusieurs des revendications précédentes, caractérisé en ce que la goulotte (20) et le carter du moteur sont intégrés en une pièce dans le corps du soc.

23. Semoir selon une ou plusieurs des revendications précédentes, caractérisé en ce que le moteur et/ou le moyen d'entraînement (26) se trouvent à l'extrémité arrière de la goulotte (20).

24. Semoir selon une ou plusieurs des revendications précédentes, caractérisé en ce que le moyen d'entraînement en oscillation (26) se trouve dans la zone avant de la goulotte oscillante (20).

25. Semoir selon une ou plusieurs des revendications précédentes, caractérisé en ce que la goulotte (20) est fixée de manière oscillante à la pointe du soc, cette fixation se faisant par des ressorts.

26. Semoir selon une ou plusieurs des revendications précédentes, caractérisé en ce que les ressorts sont réalisés par injection en une seule pièce sur la goulotte en matière plastique.

27. Semoir selon une ou plusieurs des revendications précédentes, caractérisé en ce que les ressorts sont prévus sur la pointe du soc ou sur le corps du soc.

28. Semoir selon une ou plusieurs des revendications précédentes, caractérisé en ce que la pointe du soc est en matière plastique, notamment en polyuréthane.

29. Semoir selon une ou plusieurs des revendications précédentes, caractérisé en ce que le montage de la goulotte (20) et du moyen d'entraînement en oscillation (26) sont prévus pour tous les types de socs et tous les procédés d'ensemencement.

30. Semoir selon une ou plusieurs des revendications précédentes, caractérisé en ce que la goulotte (20) et le moyen d'entraînement en oscillation (26) sont associés à des socs dits normaux, des socs de semoir larges, des socs à rouleaux ou à disques, etc...

31. Semoir selon une ou plusieurs des revendications précédentes, caractérisé en ce que la goulotte (20) et le moyen d'entraînement (26) sont montés amovibles dans les socs de semoir (14).

32. Semoir selon une ou plusieurs des revendications précédentes, caractérisé en ce que les socs de semoir (14) avec leur goulotte (20) et le moyen d'entraînement en oscillation (26) peuvent se monter sur des socs de semoir, normaux.

33. Semoir selon une ou plusieurs des revendications précédentes, caractérisé en ce que le soc (14) et la goulotte (20) et le moyen d'entraînement en oscillation (26) peuvent être facilement remplacés par des socs de semoir (14) sans goulotte ni moyen d'entraînement en oscillation sur le support de soc ou le châssis du semoir (1).

34. Semoir selon une ou plusieurs des revendications précédentes, caractérisé en ce que les goulottes oscillantes (20) respectives sont mises en oscillation par le moyen d'entraînement (26), pour des fréquences d'oscillation comprises entre 30 et 120 oscillations par seconde.

35. Semoir selon une ou plusieurs des revendications précédentes, caractérisé en ce que les oscillations des goulottes oscillantes (20) sont générées par un moyen d'entraînement en oscillation (26), électronique/électrique, régulé.

36. Semoir selon la revendication 4, caractérisé en ce que le moyen d'entraînement en oscillation (45) de la goulotte oscillante (40) est monté pour que l'extrémité (46) de la goulotte (40) se trouve dans le plan vertical de la zone médiane (47) du moyen d'entraînement en oscillation (45).

37. Semoir selon la revendication 36, caractérisé en ce que le moyen d'entraînement en oscillation (45) est en forme d'organe oscillant rotatif.

38. Semoir selon la revendication 36, caractérisé en ce que le moyen d'entraînement en oscillation (45) est un moteur à balourd.

39. Semoir selon la revendication 36, caractérisé en ce que le moyen d'entraînement en oscillation (45) de la goulotte oscillante (40) se trouve au-dessus de cette goulotte (40).

40. Semoir selon une ou plusieurs des revendications précédentes, caractérisé en ce que le moyen d'entraînement en oscillation (45) de la goulotte oscillante (40) est réglable et/ou peut être commandé, l'amplitude et/ou la fréquence d'oscillation de la goulotte distributrice (40) pouvant être adaptées aux différents types de graines de semence et/ou aux quantités à distribuer et/ou à l'intervalle séparant les différentes graines de semence (51, 56) de la rangée peuvent être modifiés.

41. Semoir selon une ou plusieurs des revendications précédentes, caractérisé en ce que la régulation et/ou la commande du moyen d'entraînement en oscillation (45) de la goulotte oscillante (40) se fait en fonction de la vitesse de déplacement du semoir parcourant la surface à ensemencer.

42. Semoir selon une ou plusieurs des revendications précédentes, caractérisé en ce que les capteurs (52) déterminant l'épaisseur de la couche de graines (51) dans la goulotte oscillante (40) se trouvent au voisinage immédiat en amont du point d'éjection (46) de la goulotte oscillante (40).

43. Semoir selon une ou plusieurs des revendications précédentes, caractérisé en ce que directement derrière le point d'éjection (46) de la goulotte oscillante (40) il y a un capteur (54) pour les graines de semence (56), ce capteur déterminant l'intervalle des différentes graines de semence (56) ayant déjà passé le point d'éjection (46).

44. Semoir selon une ou plusieurs des revendications précédentes, caractérisé en ce que les capteurs (52, 54) prévus au niveau du point d'éjection (46) ou dans la zone de la goulotte (40) détectent la dimension des graines de semence (51, 56).

45. Semoir selon une ou plusieurs des revendications précédentes, caractérisé en ce que les signaux des capteurs (52) sont transmis au dispositif électronique de régulation et/ou de commande (28) pour déterminer l'épaisseur de la couche de graines (51) dans la goulotte oscillante (40) et ce dispositif électronique de régulation et/ou de commande (28) exploite les signaux pour tirer des conclusions quant à l'épaisseur de la couche des graines (51) dans la zone d'éjection (46) de la goulotte oscillante (40) pour déterminer si l'épaisseur de la couche correspond à une graine ou plusieurs graines au niveau du point d'éjection (46) de la goulotte oscillante (40).

46. Semoir selon une ou plusieurs des revendications précédentes, caractérisé en ce que le dispositif électronique de régulation et/ou de commande (28) est couplé à un moyen d'entraînement électrique ou électronique en oscillation (45), réglable et/ou commandé pour la goulotte oscillante (40) et que les signaux des capteurs (52, 54) disposés sur la goulotte oscillante (40) servent à la régulation et/ou à la commande de la vitesse de transfert de la goulotte oscillante (40) par augmentation correspondante de la vitesse de rotation du moyen d'entraînement en oscillation (45).

47. Semoir selon une ou plusieurs des revendications précédentes, caractérisé en ce que les signaux fournis par les capteurs (52, 54) montés sur la goulotte oscillante (40) servent à surveiller et à régler la vitesse de transfert de la goulotte oscillante (40), ces signaux des capteurs (52, 54) étant transmis au dispositif électronique de régulation et/ou de commande (28) pour modifier la vitesse de transfert des graines (51) dans la goulotte oscillante (40) pour arriver à des conditions d'éjection optimales (une graine derrière l'autre).

48. Semoir selon une ou plusieurs des revendications précédentes, caractérisé en ce que la dimension des graines de la semence à distribuer est introduite dans le calculateur du dispositif électronique de régulation et/ou de commande (28) pour qu'à l'aide des signaux ainsi fournis par les capteurs (52), le calculateur tire des conclusions quant à l'épaisseur de couche des graines de la goulotte (40), pour verifier que cette épaisseur correspond à une ou plusieurs graines.

49. Semoir selon une ou plusieurs des revendications précédentes, caractérisé en ce que les capteurs (52) sont prévus dans la zone d'éjection (46) de la goulotte oscillante (40) pour déterminer l'épaisseur de la couche des graines (51) ainsi que l'intervalle des différentes graines (51, 56), seulement sur la goulotte oscillante (40) d'au moins un seul soc (14, 39, 57).

50. Semoir selon une ou plusieurs des revendications précédentes, caractérisé en ce que les capteurs (52, 54) servant à déterminer l'épaisseur de la couche de graines de semence (51) dans la zone d'éjection (46) de la goulotte oscillante (40) et l'intervalle entre les graines séparées (51, 56), sont répartis entre les socs (14, 39, 57) dans la largeur de travail du semoir ou équipent tous les socs (14, 39, 57) du semoir.

51. Semoir selon une ou plusieurs des revendications précédentes, caractérisé en ce que le capteur (54) déterminant l'intervalle des graines de semence séparées sert à compter les graines distribuées.

52. Semoir selon la revendication 4, caractérisé en ce que les goulottes sont des goulottes distributrices (20) pour régulariser le flux de graines de semence et en ce qu'entre le réservoir (5) et la goulotte distributrice respective (20) il y a chaque fois un organe de dosage (7) entraîné en rotation, réglable, qui définit la quantité ou le nombre de graines de semence à distribuer.

53. Semoir selon une ou plusieurs des revendications précédentes, caractérisé en ce que les oscillations de la goulotte distributrice (20) ont un sens de mouvement incliné d'environ 25° par rapport à la direction horizontale.

54. Semoir selon une ou plusieurs des revendications précédentes, caractérisé en ce que le point d'éjection des graines (33) ne dépasse pas 5 cm par rapport au point le plus bas de la pointe du soc de semoir (14).

55. Semoir selon une ou plusieurs des revendications précédentes, caractérisé en ce que la goulotte (20) a une section en forme de V.

56. Semoir selon une ou plusieurs des revendications précédentes, caractérisé en ce que les graines ou quantités de semence, l'amplitude et la fréquence des oscillations sont définis respectivement pour que les graines (33) se répartissent l'une derrière l'autre au point le plus bas de la goulotte (20) en forme de V.
